(19) Europäisches Patentamt
European Patent Office
Office européen des brevets

(11) **EP 3 546 918 A1**

(12) **EUROPÄISCHE PATENTANMELDUNG**

(43) Veröffentlichungstag:
**02.10.2019   Patentblatt 2019/40**

(51) Int Cl.:
***G01N 3/08*** *(2006.01)*          *G01N 19/04* *(2006.01)*
***B30B 15/06*** *(2006.01)*

(21) Anmeldenummer: **19158887.0**

(22) Anmeldetag: **22.02.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **29.03.2018   DE 102018107639**

(71) Anmelder: **Bundesrepublik Deutschland, vertreten durch den Bundesminister für Wirtschaft und Energie 12205 Berlin (DE)**

(72) Erfinder:
• **SAHRE, Mario**
  **12207 Berlin (DE)**
• **LANGE, Thorid**
  **12157 Berlin (DE)**
• **BECK, Uwe**
  **14612 Falkensee (DE)**
• **KITTLER-PACKMOR, Kai**
  **14469 Potsdam (DE)**

(74) Vertreter: **Zimmermann & Partner Patentanwälte mbB Postfach 330 920 80069 München (DE)**

(54) **LASTVERTEILUNGSVORRICHTUNG ZUM SYNCHRONEN BELASTEN EINER VIELZAHL VON PROBEN MIT EINER DEFINIERTEN ANDRUCKKRAFT**

(57)     Lastverteilungsvorrichtung (100, 100a) zum synchronen Aufbringen einer definierten Andruckkraft auf eine Vielzahl von Proben (2), umfassend: drei erste Lastverteilungselemente (20), und ein zweites Lastverteilungselement (30), wobei jedes der drei ersten Lastverteilungselemente (20) und das zweite Lastverteilungselement (30) einen Lastaufnahmepunkt (AP) und drei, dem jeweiligen Lastaufnahmepunkt (AP) gegenüber liegende Lastübertragungselemente (ap) umfasst; wobei das zweite Lastverteilungselement (30) so in Bezug zu den drei ersten Lastverteilungselementen (20) angeordnet ist, dass jedes der drei Lastübertragungselemente (ap) des zweiten Lastverteilungselements (30) mit dem Lastaufnahmepunkt (AP) eines der drei ersten Lastverteilungselemente (20) in Kontakt steht, sodass eine auf den Lastaufnahmepunkt (AP) des zweiten Lastverteilungselements (30) ausgeübte Kraft definiert auf die Lastaufnahmepunkte (AP) der drei ersten Lastverteilungselemente (20), und von dort aus definiert auf die Lastübertragungselemente (ap) der drei ersten Lastverteilungselemente (20) verteilbar ist.

FIG. 5

**Beschreibung**

HINTERGRUND

Die Erfindung liegt auf dem Gebiet des Fügens, insbesondere des stoffschlüssigen Fügens, und betrifft eine Vorrichtung zum gleichzeitigen Beaufschlagen einer Vielzahl von Proben mit einem definierten Anpressdruck über einen weiten Temperaturbereich.

Zur Beurteilung der Eignung von Klebstoffen für bestimmte Materialkombinationen oder zur Beurteilung von Oberflächenbehandlungen, die Klebeschritten vorausgehen, wird üblicherweise ein Prüfstempel stirnseitig mit dem jeweiligen Substrat verklebt und nach dem Aushärten des Klebers die Festigkeit des erzielten stoffschlüssig gefügten Verbundes bei definierter Zug- oder Scherbelastung untersucht.

Sollen nun gleichzeitig mehrere Substrate jeweils mit den für sie bestimmten Prüfstempeln stoffschlüssig verklebt werden, so kann es erforderlich sein, eine Vielzahl von Stapeln, jeweils umfassend ein Substrat, eine Klebstoffschicht und einen Prüfstempel, über eine bestimmte Haltezeit bei einer definierten Temperatur und bei einem definiertem Anpressdruck, respektive definierter Kraft, zu halten. Üblicherweise erfordert die gewünschte Vergleichbarkeit verschiedener Substrat/Klebstoff/Prüfstempel-Kombinationen eine identische Haltezeit für eine Vielzahl von Proben bei definierter, z.B. identischer Temperatur, Anpressdruck, respektive Kraft.

ZUSAMMENFASSUNG

Vor diesem Hintergrund wird eine Lastverteilungsvorrichtung zum synchronen Aufbringen einer definierten Andruckkraft auf eine Vielzahl von Proben vorgeschlagen, umfassend drei erste Lastverteilungselemente, und ein zweites Lastverteilungselement,

wobei jedes der drei ersten Lastverteilungselemente und das zweite Lastverteilungselement einen Lastaufnahmepunkt und drei, dem jeweiligen Lastaufnahmepunkt gegenüber liegende Lastübertragungselemente umfasst;

wobei das zweite Lastverteilungselement so in Bezug zu den drei ersten Lastverteilungselementen angeordnet ist, dass jedes der drei Lastübertragungselemente des zweiten Lastverteilungselements mit dem Lastaufnahmepunkt eines der drei ersten Lastverteilungselemente in Kontakt steht,

sodass eine auf den Lastaufnahmepunkt des zweiten Lastverteilungselements ausgeübte Kraft definiert auf die Lastaufnahmepunkte der drei ersten Lastverteilungselemente, und von dort aus definiert auf die Lastübertragungselemente der drei ersten Lastverteilungselemente verteilbar ist.

Weiter wird ein Verfahren zum synchronen Aufbringen einer definierten Andruckkraft auf eine Vielzahl von Proben vorgeschlagen, umfassend:

Bereitstellen einer Lastverteilungsvorrichtung;

Bereitstellen der Vielzahl von Proben, wobei die Proben jeweils eine Kontaktfläche und eine der Kontaktfläche gegenüber liegende Fügefläche umfassen;

Anordnen der Lastverteilungsvorrichtung auf der Vielzahl von Proben, sodass die Lastübertragungselemente der drei ersten Lastverteilungselemente auf den Kontaktflächen der Proben aufliegen, und von den Lastübertragungselementen der drei ersten Lastverteilungselemente auf die Proben übertragbare Kräfte entlang zentraler Achsen der Proben verlaufen, wobei die drei ersten Lastverteilungselemente in einer Ebene liegen;

Konfigurieren einer Lastaufbringvorrichtung derart, dass eine auf den zentral angeordneten Lastaufnahmepunkt des zweiten Lastverteilungselements aufbringbare Kraft über die Lastübertragungselemente des zweiten Lastverteilungselements der definierten Andruckkraft für die jeweilige Probe entspricht;

Herstellen eines Kontaktes zwischen einem Kontaktelement der Lastaufbringvorrichtung und einem zentralen Lastaufnahmepunkt eines dritten Lastverteilungselements oder eines zweiten Lastverteilungselements; und

Eintragen der Kraft über das Kontaktelement.

Ebenso wird ein Kit zur synchronen Belastung einer Vielzahl von Proben mit einer definierten Andruckkraft vorgeschlagen, umfassend:

$3^n$ erste Lastverteilungselemente, wobei n= 1 oder 2 ist;

$3^m$ zweite Lastverteilungselemente, wobei m=n-1 ist;

ein drittes Lastverteilungselement, wenn n=2 ist;

wobei jedes der ersten Lastverteilungselemente, jedes zweite Lastverteilungselement und jedes dritte Lastverteilungselement einen Lastaufnahmepunkt und drei, dem jeweiligen Lastaufnahmepunkt gegenüber liegende Lastübertragungselemente umfasst.

## DETAILLIERTE BESCHREIBUNG

In diesem Zusammenhang wird hier unter einer Probe eine Anordnung bzw. ein Verbund eines Substrats mit einem Stempel verstanden, wobei die Anordnung bzw. der Verbund von Substrat und Stempel eine zwischen Substrat und Stempel angeordnete Klebstoffschicht umfasst. Insbesondere weist das Substrat eine zum Kleben bestimmte Fläche auf, wie auch der Stempel eine zum Kleben bestimmte Fläche umfasst. Ein Klebstoff wird unter Ausbildung einer Klebstoffschicht zwischen den einander gegenüberliegenden zum Kleben bestimmte Flächen des Substrates und des Stempels angeordnet.

Der Begriff "Probe" steht dabei sowohl für eine noch ungeklebte, wie auch für eine bereits geklebte Anordnung von Substrat, Klebstoffschicht und Stempel. Da an Stelle eines Klebstoffs auch ein Lot, z.B. in Form einer Lotpaste, eingesetzt werden kann, steht der Begriff Probe ebenso für eine noch ungelötete, eine bereits umgeschmolzene oder gelötete oder eine anderweitig stoffschlüssig gefügte oder zum stoffschlüssigen Fügen bestimmte Anordnung von Substrat, Lot bzw. Lotpaste oder umgeschmolzenem Lot mit einem Stempel. Klebstoff, Lot und Lotpaste werden verallgemeinernd auch als Fügemittel bezeichnet.

Üblicherweise sind das Substrat, die entsprechende Fügemittelschicht und der Stempel übereinander gestapelt und, beispielsweise, auf einer Grundplatte angeordnet. Sie bilden so jeweils einen Stapel. Entsprechend werden die zum Kleben oder zum Löten bestimmten Flächen des Substrats und des Stempels verallgemeinernd als Fügeflächen bezeichnet.

Gemäß einer Ausführungsform wird somit eine Lastverteilungsvorrichtung zum synchronen Aufbringen einer definierten Andruckkraft auf eine Vielzahl von Proben vorgeschlagen, die drei erste Lastverteilungselemente und ein zweites Lastverteilungselement aufweist. Hierbei weist jedes der drei ersten Lastverteilungselemente und das zweite Lastverteilungselement jeweils einen Lastaufnahmepunkt und drei Lastübertragungselemente auf, die dem jeweiligen Lastaufnahmepunkt gegenüber liegen. Weiter ist das zweite Lastverteilungselement so in Bezug zu den drei ersten Lastverteilungselementen angeordnet, dass jedes der drei Lastübertragungselemente des zweiten Lastverteilungselements mit dem Lastaufnahmepunkt eines der drei ersten Lastverteilungselemente in Kontakt steht, sodass eine auf den Lastaufnahmepunkt des zweiten Lastverteilungselements ausgeübte Kraft definiert auf die Lastaufnahmepunkte der drei ersten Lastverteilungselemente, und von dort aus definiert auf die Lastübertragungselemente der drei ersten Lastverteilungselemente und von dort jeweils auf eine Probe verteilbar ist.

Vorteilhaft ist über die jeweilige Anordnung der drei Lastübertragungselemente in Relation zu der Position des Lastaufnahmepunktes ein definiertes Verhältnis der drei Lasthebel zueinander und so eine durch dieses Verhältnis definierte Andruckkraft einer jeden Probe erreichbar.

Gemäß einer Ausführungsform der vorgeschlagenen Lastverteilungsvorrichtung ist der Lastaufnahmepunkt eines jeden Lastverteilungselements, das ausgewählt ist unter den drei ersten Lastverteilungselementen und dem zweiten Lastverteilungselement, so auf dem Lastverteilungselement angeordnet, dass er im Flächenschwerpunkt eines gedachten Dreiecks liegt, wobei dieses gedachte (virtuelle) Dreieck durch die drei Lastübertragungselemente jedes Lastverteilungselements definiert ist, und wobei die drei Lastübertragungselemente eines Lastverteilungselements die Eckpunkte jeweils eines virtuellen Dreiecks sind.

Vorteilhaft bewirkt die beschriebene Anordnung des Lastaufnahmepunktes einerseits die Lagestabilität des Lastverteilungselementes gemäß der Konstruktion eines Dreibeins, andererseits führt sie zur Ausbildung von jeweils drei Lasthebeln (Kraftarmen), die sich beim betreffenden Lastverteilungselement jeweils vom Lastaufnahmepunkt bis zum betreffenden Lastübertragungselement erstrecken. Der Lastaufnahmepunkt ist damit der Angelpunkt bzw. Drehpunkt betreffender Hebel.

Gemäß einer Ausführungsform der vorgeschlagenen Lastverteilungsvorrichtung ist eine äußere Form zumindest eines der Lastübertragungselemente der zweiten Lastverteilungselemente an die äußere Form des Lastaufnahmepunktes zumindest eines der ersten drei Lastverteilungselemente, sodass das zumindest eine Lastübertragungselement des zweiten Lastverteilungselements mit dem Lastaufnahmepunkt des zumindest einen ersten Lastverteilungselements in einen Eingriff gebracht werden kann.

Vorteilhaft sichert das die Stabilität der Anordnung, indem die Position des Lastaufnahmepunktes des betreffenden ersten Lastverteilungselements relativ zum korrespondierenden Lastübertragungselement des zweiten Lastverteilungselements durch den Eingriff fixiert wird.

Gemäß einer Ausführungsform der vorgeschlagenen Lastverteilungsvorrichtung weist zumindest eines der Lastverteilungselemente (20, 30) eine Kontur auf, die zumindest abschnittsweise beschreibbar ist durch: eine Umfangslinie eines im Wesentlichen gleichseitigen Dreiecks, durch die Kontur eines dreizackigen Sterns, durch eine Umfangslinie eines Kreises, oder durch die Kontur eines Polyeders. Unter einem "im Wesentlichen gleichseitigen Dreieck" werden Dreiecke verstanden, deren Seitenlängen sich um ± 5 % von einer arithmetisch mittleren Seitenlänge der drei Seiten des Dreiecks unterscheiden.

Vorteilhaft kann so einerseits der Materialaufwand zur Fertigung des betreffenden Lastverteilungselements gering gehalten werden, andererseits wird eine maximale Flexibilität in Hinsicht auf die Anordnung des betreffenden ersten Lastverteilungselements erreicht. Letztere betrifft vor allem eine mögliche Rotation des betreffenden ersten Lastverteilungselements um eine virtuelle Achse, die durch den Lastaufnahmepunkt und parallel zu einer Flächennormale des Lastverteilungselements verläuft. Hieraus resultiert eine weitestgehende Freiheit für die kollisionsfreie Anordnung der Proben.

Gemäß einer Ausführungsform der vorgeschlagenen Lastverteilungsvorrichtung ist eine Form der Lastaufnahmepunkte und eine Form der Lastübertragungselemente so ausgewählt bzw. angepasst, dass bei einer Anordnung des zweiten Lastverteilungselements über bzw. auf den drei ersten Lastverteilungselementen, bei der die Lastübertragungselemente des zweiten Lastverteilungselements jeweils mit einem Lastaufnahmepunkt der drei ersten Lastverteilungselemente im Eingriff stehen. Dabei ausgebildete Kontakte zwischen Lastaufnahmepunkten und Lastübertragungselementen liegen somit in einer Ebene. Diese Ebene verläuft beispielsweise im Wesentlichen parallel zu einer Oberfläche einer Grundplatte, auf der die Proben angeordnet sind. Bevorzugt liegt auch der Lastaufnahmepunkt der zweiten Lastverteilungselemente in dieser Ebene. Unter "im Wesentlichen parallel" wird eine Verkippung der Oberflächen zueinander um höchstens 3° verstanden.

Vorteilhaft ergibt sich hieraus eine kompakte Anordnung. Insbesondere wird so die Änderung der Hebellängenverhältnisse von verbleibenden (nicht kompensierten) Probenhöhenabweichungen minimiert.

Gemäß einer Ausführungsform der vorgeschlagenen Lastverteilungsvorrichtung weist dieselbe weiterhin eine Lastaufbringungsvorrichtung auf, wobei die Lastaufbringungsvorrichtung relativ zum zweiten Lastverteilungselement so anordenbar ist, dass eine von der Lastaufbringungsvorrichtung auf den Lastaufnahmepunkt des zweiten Lastverteilungselements aufbringbare Kraft entlang einer gedachten Achse wirkt, die durch den Lastaufnahmepunkt des zweiten Lastverteilungselements und im Wesentlichen rechtwinklig zu einer Ebene verläuft, in der die Lastübertragungselemente des zweiten Lastverteilungselements liegen. Unter "im Wesentlichen rechtwinklig" wird dabei eine Abweichung von 90° um bis zu ± 5° verstanden.

Vorteilhaft bewirkt die beschriebene Anordnung der Lastaufbringungsvorrichtung eine definierte Lastverteilung gemäß den konstruktiv vorgegebenen und damit definierten Hebellängenverhältnissen.

Gemäß einer Ausführungsform der vorgeschlagenen Lastverteilungsvorrichtung weist die beschriebene Lastaufbringungsvorrichtung einen Massekörper, einen Prüfstempel einer Prüfmaschine, und/oder einen Hebelarm auf.

Vorteilhaft verfügen entsprechende Prüflabore über Massekörper definierter Masse bzw. Prüfanlagen unterschiedlichster Bauart.

Gemäß einer Ausführungsform der vorgeschlagenen Lastverteilungsvorrichtung hat die Lastaufbringvorrichtung ein Kontaktelement für die Lastaufbringung auf das zweite Lastverteilungselement, wobei eine Form des Kontaktelements an die Form des Lastaufnahmepunktes des zweiten Lastverteilungselements angepasst ist. Beispielsweise weist das Kontaktelement einen konvexen Abschnitt auf, wenn der Lastaufnahmepunkt des zweiten Lastverteilungselements einen konkaven Abschnitt aufweist, und das Kontaktelement weist einen konkaven Abschnitt auf, wenn der Lastaufnahmepunkt des zweiten Lastverteilungselements einen konvexen Abschnitt aufweist. Hierbei sind konkave und konvexe Abschnitte miteinander in Eingriff bringbar, passen also jeweils zueinander.

Vorteilhaft ermöglicht das Kontaktelement den gezielten und lokal definierten Krafteintrag.

Gemäß einer Ausführungsform der vorgeschlagenen Lastverteilungsvorrichtung weist diese weiterhin eine Grundplatte auf. Hierbei weist die Vielzahl der Proben jeweils eine Kontaktfläche und eine der Kontaktfläche gegenüber liegende Fügefläche auf. Die Proben weisen jeweils auch eine virtuelle Längsachse auf, die orthogonal zur Fügefläche verläuft. Hierbei ist die Vielzahl der Proben zwischen der Grundplatte und den ersten Lastverteilungselementen so anordenbar, dass die zentralen Längsachsen orthogonal zur Grundplatte orientiert sind und jeweils durch ein Lastübertragungselement eines ersten Lastverteilungselements verlaufen. Weiterhin liegen die drei Lastübertragungselemente der drei ersten Lastverteilungselemente jeweils, im Wesentlichen zentral, auf der oberen Kontaktfläche einer Probe oder eines Probenersatzkörpers auf, wobei das zweite Lastverteilungselement im Wesentlichen parallel zu den drei ersten Lastverteilungselementen und zur Grundplatte orientiert ist. Unter "im Wesentlichen zentral" wird hierbei eine Abweichung um maximal 5% des Radius der typischerweise kreisrunden Kontaktflächen vom Mittelpunkt der Kontaktfläche verstanden. Anders ausgedrückt sind eine durch die Anordnung der drei ersten Lastverteilungselemente definierte Ebene und die Ebene, in der das zweite Lastverteilungselement angeordnet ist, sowie die Ebene der Grundplatte im Wesentlichen parallel.

Vorteilhaft ermöglicht eine waagerecht ausgerichtete und ebene Grundplatte reproduzierbare Arbeitsbedingungen.

Gemäß einer Ausführungsform der vorgeschlagenen Lastverteilungsvorrichtung weist diese weiterhin zumindest ein Führungselement auf, wobei das Führungselement so auf der Grundplatte angeordnet ist, dass eine seitliche Beweglichkeit zumindest eines der drei ersten Lastverteilungselemente einschränkbar ist, wenn jeweils eine Probe oder ein Probenersatzkörper zwischen der Grundplatte und den drei Lastübertragungselementen der drei ersten Lastverteilungselemente angeordnet ist/sind.

Vorteilhaft erleichtert die Verwendung von Führungselementen den Aufbau der beschriebenen Lastverteilungsvorrichtung.

Gemäß einer Ausführungsform der vorgeschlagenen Lastverteilungsvorrichtung ist ein Material der Grundplatte und/oder ein Material der zumindest drei ersten Lastverteilungselemente und/oder ein Material des zweiten Lastverteilungselements ausgewählt unter einem Material, welches eine thermische Ausdehnung von etwa 0,6 % bei einer Temperaturänderung von 275 K aufweist. Beispielsweise ist das ausgewählte Material Duraluminium.

Vorteilhaft weisen alle Elemente der Vorrichtung identische oder ähnliche thermische Ausdehnungskoeffizienten auf, um unter einer thermischen Belastung während des Fügevorganges ein Verkanten der Proben oder eines der Lastverteilungselemente und eine daraus resultierende Abweichung von der definierten Belastung der Proben zu verhindern. Vorteilhaft sind die Materialien aller Lastverteilungselemente und der Grundplatte identisch.

Gemäß einer Ausführungsform der vorgeschlagenen Lastverteilungsvorrichtung weist diese ein drittes Lastverteilungselement auf, wobei das dritte Lastverteilungselement einen Lastaufnahmepunkt und drei, dem Lastaufnahmepunkt gegenüber liegende Lastübertragungselemente umfasst, wobei der Lastaufnahmepunkt des dritten Lastverteilungselements in einem durch die drei Lastübertragungselemente definierten virtuellen Dreieck liegt, wobei die drei Lastübertragungselemente Eckpunkte des virtuellen Dreiecks sind; wobei das dritte Lastverteilungselement so in Bezug zu zum zweiten Lastverteilungselement anordenbar ist oder angeordnet ist, dass eines der drei Lastübertragungselemente des dritten Lastverteilungselements mit dem Lastaufnahmepunkt des zweiten Lastverteilungselementes in Kontakt steht, wobei die Lastverteilungsvorrichtung bis zu drei zweite Lastverteilungselemente und bis zu neun erste Lastverteilungselemente umfasst.

Vorteilhaft ergibt sich so die Möglichkeit, nicht nur bis zu neun Proben definiert zu belasten, sondern sogar bis zu 27 Proben mit einer durch ein Hebellängenverhältnis der jeweils durch Lastaufnahmepunkte und Lastübertragungspunkte definierten Andruckkraft zu beaufschlagen.

Gemäß einer Ausführungsform der vorgeschlagenen Lastverteilungsvorrichtung sind die Lastübertragungselemente der drei ersten Lastverteilungselemente über eine Schraubverbindung mit dem betreffenden ersten Lastverteilungselement verbunden, sodass durch eine Drehstellung des Lastverteilungselements ein Höhenunterschied der Proben ausgleichbar ist.

Vorteilhaft ermöglicht das die Beaufschlagung von Proben unterschiedlicher Höhe mit einer jeweils definierten Andruckkraft. Wie weiter unten noch belegt, verursachen Höhenunterschiede der Proben von bis zu 5 mm keine über die Messungenauigkeit hinausgehende Abweichungen von der definierten Andruckkraft, wenn die Vorrichtung so eingerichtet war, dass für alle Proben eine identische Andruckkraft zu erwarten war.

Gemäß einer Ausführungsform der vorgeschlagenen Lastverteilungsvorrichtung weisen alle Lastübertragungselemente eines Lastverteilungselements einen identischen Abstand zum Lastaufnahmepunkt des betreffenden Lastverteilungselements auf. Die Lastverteilungselemente sind so ausgeführt, dass $r \leq R$ gilt, vorausgesetzt "r" sei der Abstand der Lastübertragungselemente eines ersten Lastverteilungselements von einer gedachten Achse, die durch den Lastaufnahmepunkt des ersten Lastverteilungselements und rechtwinklig zu einer Ebene verläuft, wobei diese Ebene durch die Position der drei Lastübertragungselemente des ersten Lastverteilungselements definiert ist, und "R" sei der Abstand der Lastübertragungselemente des zweiten Lastverteilungselements von einer gedachten Achse, die durch den Lastaufnahmepunkt des zweiten Lastverteilungselements verläuft und die im Wesentlichen rechtwinklig zu derjenigen Ebene orientiert ist, die von den drei Lastübertragungselementen des zweiten Lastverteilungselements definiert wird.

Vorteilhaft ermöglicht das eine weitestgehend kompakte Anordnung der Proben.

Gemäß einer Ausführungsform wird ein Verfahren zum synchronen Aufbringen einer definierten Andruckkraft auf eine Vielzahl von Proben vorgeschlagen, welches durch die folgenden Schritte gekennzeichnet ist:

- Bereitstellen einer Lastverteilungsvorrichtung gemäß einer beliebigen der vorgeschlagenen Ausführungsformen;

- Bereitstellen der Vielzahl von Proben, wobei die Proben jeweils eine Kontaktfläche und eine der Kontaktfläche gegenüber liegende Fügefläche umfassen;

- Anordnen der Lastverteilungsvorrichtung auf der Vielzahl von Proben, sodass die Lastübertragungselemente der drei ersten Lastverteilungselemente auf den Kontaktflächen der Proben aufsitzen, und von den Lastübertragungselementen der drei ersten Lastverteilungselemente auf die Proben übertragbare Kräfte entlang zentraler Achsen der Proben verlaufen, wobei die drei ersten Lastverteilungselemente (20) im Wesentlichen in einer Ebene liegen;

- Konfigurieren einer Lastaufbringvorrichtung derart, dass eine auf den zentral angeordneten Lastaufnahmepunkt des zweiten Lastverteilungselements aufbringbare Kraft über die Lastübertragungselemente des zweiten Lastverteilungselements der definierten Andruckkraft für die jeweilige Probe entspricht;

- Herstellen eines Kontaktes zwischen einem Kontaktelement der Lastaufbringvorrichtung und einem zentralen Lastaufnahmepunkt eines dritten Lastverteilungselements oder eines zweiten Lastverteilungselements; und

- Eintragen der Kraft über das Kontaktelement.

Vorteile des vorgeschlagenen Verfahrens ergeben sich für den einfachsten Fall, dass alle Lasthebel jedes Lastverteilungselements gleich lang sind, daraus, dass dann auch jede Probe mit exakt der gleichen Kraft belastet wird. Würden also 3 x 3 Proben unter den 3 x 3 Lastübertragungselementen der drei ersten Lastverteilungselemente angeordnet, so wird jede Probe mit 1/9 derjenigen Kraft belastet, die auf den zentral angeordneten Lastaufnahmepunkt des zweiten Lastverteilungselements über das Kontaktelement der Lastaufbringungsvorrichtung eingetragen wird.

Gemäß einer Ausführungsform des vorgeschlagenen Verfahrens beinhaltet selbiges weiterhin den Schritt:

- Anordnen zumindest einer Schicht eines Fügemittels zwischen der Fügefläche der Probe und einem Substrat.

Vorteile ergeben sich aus der Möglichkeit, die Eignung des Fügemittels unter den gegebenen Bedingungen (z.B. Temperatur, Luftfeuchte) für die betreffenden Fügeflächen zu prüfen.

Gemäß einer Ausführungsform des vorgeschlagenen Verfahrens umfasst das Verfahren weiterhin ein Temperieren der Vorrichtung, wobei das Temperieren beispielsweise in einem Temperaturbereich von -196 °C bis 300 °C erfolgen kann. Die vorgeschlagenen Ausführungsformen beziehen sich auf kalt- und warmaushärtende Klebstoffe. Diese werden bisher vorwiegend bei Raumtemperatur geklebt ("kalt-aushärtend") oder bei erhöhter Temperatur ("warm-aushärtend") geklebt. Typische maximale Aushärtetemperaturen liegen für Klebstoffe bei maximal 180 °C. Die beschriebene Anwendung des Verfahrens ist hinsichtlich der Gleichverteilung von Kräften jedoch nicht auf Temperaturen von 180 °C beschränkt, sondern kann ebenso auf die genannte Temperatur bis 300 °C erweitert werden. Eine solche Temperatur ist im Labor einfach zu realisieren.

Vorteile ergeben sich mit der Möglichkeit, die Belastung der Proben in einem praxisrelevanten Temperaturbereich durchführen zu können.

Gemäß einer weiteren Ausführungsform wird ein Kit bzw. ein Bausatz zur synchronen Belastung einer Vielzahl von Proben mit einer definierten Andruckkraft vorgeschlagen. Der vorgeschlagene Bausatz beinhaltet eine Anzahl von $3^n$ ersten Lastverteilungselementen, wobei n= 1 oder 2 ist; eine Anzahl von $3^m$ zweiten Lastverteilungselementen, wobei m=n-1 ist; und ein drittes Lastverteilungselement, wenn n=2 ist; wobei jedes der ersten Lastverteilungselemente, jedes zweite Lastverteilungselement und jedes dritte Lastverteilungselement einen Lastaufnahmepunkt und drei, dem jeweiligen Lastaufnahmepunkt gegenüber liegende Lastübertragungselemente umfasst, und die Lastaufnahmepunkte zentral in einem gedachten Dreieck liegen, an dessen gedachten Eckpunkten die jeweiligen Lastübertragungselemente angeordnet sind.

Vorteile ergeben sich mit der Möglichkeit der Verwendung eines standardisierten Bausatzes durch verschiedene Prüfeinrichtungen und so erreichbare reproduzierbare Prüfbedingungen und Vergleichbarkeit erhobener Ergebnisse.

Gemäß einer Ausführungsform des vorgeschlagenen Kit bzw. Bausatzes gilt r ≤ R, vorausgesetzt "r" sei ein Abstand eines beliebigen Lastübertragungselements der ersten Lastverteilungsplatte zum Lastaufnahmepunkt des ersten Lastverteilungselements und "R" sei ein Abstand eines beliebigen Lastübertragungselements des zweiten Lastverteilungselements (30) zum Lastaufnahmepunkt des zweiten Lastverteilungselements (30).

Vorteile werden im Zusammenhang mit der Wahl einer geometrischen Form der Lastverteilungselemente deutlich. Während für kreisscheibenförmige Lastverteilungselemente r stets kleiner als R sein sollte, ermöglichen Dreieck-Formen, bei bestimmten Durchmessern der Proben sogar identische Werte von r und R.

Gemäß einer Ausführungsform des vorgeschlagenen Kit bzw. ein Bausatzes sind die Abstände "r" für alle ersten Lastverteilungselemente (20) identisch; und/oder die Abstände "R" sind für alle zweiten Lastverteilungselemente identisch; und/oder die Lastübertragungselemente der ersten Lastverteilungselemente und/oder der zweiten Lastverteilungselemente sind radialsymmetrisch um die jeweiligen Lastaufnahmepunkte der ersten Lastverteilungselemente, bzw. der zweiten Lastverteilungselemente, bzw. des dritten Lastverteilungselements angeordnet.

Vorteilhaft sichern die beschriebenen Symmetrieverhältnisse identische, weil allein durch Hebellängenverhältnisse definierte, Lastverteilung auf die Vielzahl der Proben. Eine Radialsymmetrie schließt zusätzlich etwaige thermische Effekte aus, wenn die Materialien der Lastverteilungselemente in sich homogen sind (oder als homogen gelten können) und keine Unterschiede bei der thermischen Ausdehnung in unterschiedliche Raumrichtungen vorliegen (oder angenommen werden können).

Gemäß einer Ausführungsform des vorgeschlagenen Bausatzes bzw. Kit umfasst zumindest eines der Lastübertragungselemente eines Lastverteilungselements einen Kopf oder eine Spitze einer Schraube, die in einem Gewinde drehbar anordenbar ist, das in oder an einem ersten und/oder an einem zweiten Lastverteilungselement vorliegt, wobei sich das Gewinde in einer zum Lastverteilungselement im Wesentlichen rechtwinklig verlaufenden Richtung erstreckt.

Vorteile ergeben sich aus der leichten Zugänglichkeit entsprechender Schrauben und der Möglichkeit, durch eine entsprechende Drehung der Schrauben, Höhenunterschiede der Proben leicht kompensieren zu können. An Stelle konisch geformter Schrauben können auch polierte (Kugel)flächen am Lastübertragungselement vorgesehen sein.

Gemäß einer Ausführungsform des vorgeschlagenen Bausatzes bzw. Kit hat zumindest eines der Lastverteilungselemente eine Kontur, die zumindest abschnittsweise beschreibbar ist durch eine Umfangslinie eines im Wesentlichen gleichseitigen Dreiecks, durch die Kontur eines dreizackigen Sterns, durch eine Umfangslinie eines Kreises, oder durch die Kontur eines Polyeders.

Vorteile ergeben sich beispielsweise aus der mit einer Dreiecks- oder Sternform gegenüber einer Kreisform (Scheibenform) erreichbaren Materialeinsparung. Sind die ersten Lastverteilungselemente als dreieckige Platten oder dreizackige Sterne gestaltet, so kann - unter Berücksichtigung eines Durchmessers der Proben - letztlich weitestgehende Freiheit bezüglich ihrer Anordnung auf der Grundplatte erzielt werden. Kreisscheiben sind hingegen als Halbzeuge leicht zugänglich und damit unter Umständen kostengünstiger.

Weitere Ausführungsformen, Modifikationen und Verbesserungen der vorgeschlagenen Ausführungsformen ergeben sich anhand der nachfolgenden Beschreibung, der Figuren und der beigefügten Ansprüche.

KURZE BESCHREIBUNG DER FIGUREN

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

Fig. 1 zeigt die Kraftverteilung einer "3-Punkt-Balkenwaage" gemäß Hebelgesetz.

Fig. 2 zeigt die durch Symmetrie konstruktiver Elemente erreichbare Kraftgleichverteilung von einem zentral angeordneten Lastaufbringungspunkt auf 3x3=9 Punkte.

Fig. 3 zeigt drei erste Lastverteilungselemente und ein zweites Lastverteilungselement gemäß einer Ausführungsform der beschriebenen Vorrichtung.

Fig. 4 zeigt eine perspektivische Ansicht der Anordnung eines zentralen Lastaufnahmepunktes und der drei Lastabgabepunkte eines kreisscheibenförmigen Lastverteilungselements der beschriebenen Vorrichtung.

Fig. 5 zeigt einen schematischen Aufriss einer Ausführungsform der beschriebenen Vorrichtung.

Fig. 6 zeigt eine Ansicht eines Querschnitts der beschriebenen Vorrichtung mit auf Probenstempeln aufsitzenden Lastabgabepunkten.

Fig. 7 zeigt eine Ansicht eines Querschnitts einer Ausführungsform mit in einer Ebene liegenden Lastabgabepunkten.

Fig. 8 zeigt eine Ausführungsform der beschriebenen Vorrichtung mit einem Lastverteilungselement in Form eines Dreiecks.

Fig. 9 zeigt eine zwischen einem Deckglas und einem Probenstempel angeordnete aus Knete geformte Kugel nach Druckbelastung in Seitenansicht.

Fig. 10 zeigt die Aufsicht auf eine unter Druckbelastung zu einer Scheibe verformte Knete-Kugel unter einem Deckglas.

Fig. 11 zeigt Ergebnisse einer Kraftverteilungsmessung auf 9 verschiedene Proben eines Messzyklus. Dicken der Knetschicht ($\mu$m) sind gegen die Probennummer (Abszisse) abgetragen.

Fig. 12 zeigt eine Kalibrierkurve zur Korrelation von Knetschichtdicke ($\mu$m) auf der Ordinate gegen die Last (g) je Probe (Abszisse) für Kugeln aus jeweils 30 mg Knete bei 23,5 °C.

Fig. 13 zeigt eine Grundplatte mit darauf angeordneten beispielhaften Führungselementen zum Aufbau einer prototypischen Ausführungsform der beschriebenen Vorrichtung.

Fig. 14 zeigt die Grundplatte mit darauf angeordneten beispielhaften Führungselementen aus Fig. 13 mit Substraten.

Fig. 15 zeigt die Anordnung von Stützringen über den Substraten beim Aufbau der prototypischen Ausführungsform aus Fig. 14.

Fig. 16 zeigt die Anordnung von auf den Substraten aufsitzenden Stempeln, die in Hülsen laufen, welche von den Stützringen gestützt werden.

Fig. 17 zeigt die Anordnung von drei ersten Lastverteilungselementen über den Proben beim Aufbau der prototypischen Ausführungsform aus Fig. 16.

Fig. 18 zeigt die Anordnung eines zweiten Lastverteilungselements über drei ersten Lastverteilungselementen beim Aufbau der in Fig. 17 dargestellten prototypischen Ausführungsform.

Fig. 19 zeigt eine beispielhafte Ausführungsform der beschriebenen Vorrichtung während des Aufbringens einer jeweils identischen Last auf 9 Proben.

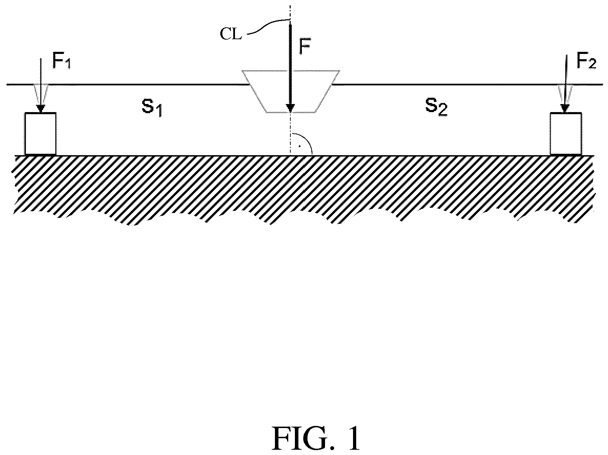

Insbesondere zeigt Fig. 1, dass für gleichlange Lasthebel $s_1$ und $s_2$ eine auf einen zentralen Lastpunkt (Lastaufnahmepunkt) aufgebrachte Kraft F für jeden der zwei Lastübertragungspunkte $F_1$ und $F_2$ halbiert wird: $F_1=F_2=F/2$. Äquivalent gilt $F_1=F_2=F_3=F/3$, für die Verteilung der Kraft F auf drei Spitzen eines gleichseitigen Dreiecks mit einem Radius des Außenkreises $R_1=R_2=R_3$. Dabei wird die Kraft F im Flächenschwerpunkt des gleichseitigen Dreiecks aufgebracht. Für ein gleichseitiges Dreieck fällt der Flächenschwerpunkt mit dem Mittelpunkt des Außenkreises und dem Mittelpunkt des Innenkreises zusammen. Andere, jedoch ebenso exakt definierte Lastverteilungen gelten für andere virtuelle Dreiecke, wenn die Last, beispielsweise wiederum im Flächenschwerpunkt des virtuellen Dreiecks aufgebracht wird, bzw. der Lastaufnahmepunkt AP im Flächenschwerpunkt des betreffenden Dreiecks liegt.

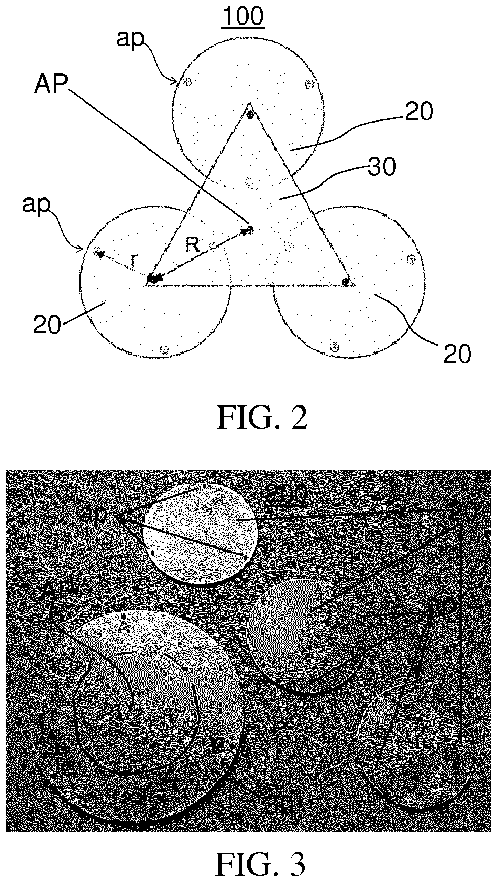

Fig. 2 zeigt eine Lastverteilungsvorrichtung 100, die ein Lastverteilungselement mit dreieckiger Form aufweist. Im Zentrum des hier als dreieckige Platte ausgeführten Lastverteilungselements ist ein Lastaufnahmepunkt AP vorgesehen. Der Lastaufnahmepunkt AP ist der Mittelpunkt eines gedachten Außenkreises des Dreiecks, auf dem drei Lastübergabepunkte ap liegen. Er ist, wie bereits erwähnt, ebenso der Flächenschwerpunkt des gleichseitigen Dreiecks. Dieses Lastverteilungselement, das hier als zweites Lastverteilungselement 30 bezeichnet wird, ist über drei zueinander identischen, hier kreisscheibenförmigen, Lastverteilungselementen angeordnet. Diese Lastverteilungselemente werden hier als erste Lastverteilungselemente 20 bezeichnet. Auch sie haben jeweils drei, hier ebenfalls radialsymmetrisch angeordnete Lastübertragungselemente ap. Außenkreise entsprechender gedachter Dreiecke haben den Radius r. Entsprechend gelten hier die oben erläuterten Lastverteilungs-Verhältnisse auf 3x3 Proben, die unter den 3x3 Lastübertragungselementen ap der ersten Lastverteilungselemente 20 angeordnet werden können. Die auf eine Probe einwirkende Kraft entspricht genau 1/9 der auf den Lastaufnahmepunkt des zweiten Lastverteilungselements 30 ausgeübten Kraft. Bei der Bestimmung der auf die Proben einwirkenden definierten Kraft ist zusätzlich selbstredend die Masse der Vorrichtung selbst zu berücksichtigen.

Fig. 3 zeigt einen Bausatz bzw. Kit 200. Der abgebildete Bausatz 200 umfasst drei erste Lastverteilungselemente 20, die jeweils drei - hier radialsymmetrisch angeordnete - Lastübertragungselemente ap aufweisen. Die Lastübertragungselemente des zweiten Lastverteilungselements 30 sind hier mit "A", "B" und "C" markiert. Zentral ist, hier in Form einer einfachen Körnung, der Lastaufnahmepunkt AP gekennzeichnet. Auch die drei ersten Lastverteilungselemente 20 haben jeweils einen zentral angeordneten Lastaufnahmepunkt AP, der hier aber nicht sichtbar ist, da die drei Kreisscheiben mit der Unterseite nach oben liegen. Die Lastübertragungselemente ap der drei ersten Lastverteilungselemente 20 umfassen beispielsweise M2 Gewindebohrungen und darin aufgenommene entsprechende Schrauben. Die drei Lastübertragungselemente ap des zweiten Lastverteilungselements 30, hier mit A, B und C gekennzeichnet, umfassen beispielsweise M3 Gewindebohrungen und darin aufgenommene entsprechende Schrauben.

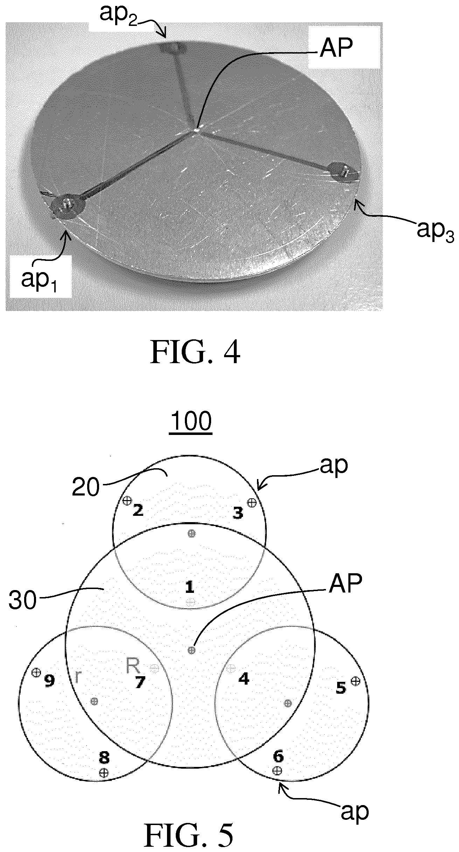

Fig. 4 zeigt die Position eines oberseitigen Lastaufnahmepunktes AP, hier als Körnung ausgeführt, und die radialsymmetrische Anordnung von drei Schrauben, deren unterseitige Köpfe die Funktion des Lastübertragungselements ap erfüllen.

Die Konstruktionsmerkmale aller Lastverteilungselemente 20, 30 der vorgeschlagenen Vorrichtung 100, 100a sind prinzipiell gleich: Alle Lastverteilungselemente 20, 30 weisen oberseitig einen zentralen Lastaufnahmepunkt AP und an ihrer Unterseite drei Lastabgabepunkte, bzw. Lastübertragungselemente ap auf. Typischerweise liegen die für den Kontakt mit korrespondierenden Lastaufhahmepunkten AP der Lastverteilungselemente niedrigerer Ordnung vorgesehenen Lastübertragungselemente bzw. Druckpunkte (z.B. in Form von Kreiskegel- oder Pyramidenspitzen, Kugelabschnitten, Halbkugeln, Kugeln) oder Endflächen (z.B. Kreiskegelstumpf, Pyramidenstumpf , Kugelschicht, Zylinder) in einer Ebene, die parallel zu einer durch das betreffende Lastverteilungselement definierten Ebene liegt. Gemäß einer einfach zu realisierenden prototypischen Ausführungsform stellen drei durch die Lastverteilungselemente eingedrehte Schrauben, beispielsweise mit Rund- oder Linsenkopf (von der Unterseite aus eingedreht) oder mit abgerundeter oder angespitzter Spitze, beispielsweise Bohrschrauben (von oben eingedreht), drei Lastabgabepunkte bzw. Lastübertragungselemente ap je Lastverteilungselement 20, 30 bereit.

Der im Fall eines gleichseitigen Dreiecks zentrale Lastaufnahmepunkt AP kann gemäß einer prototypischen Ausführungsform beispielsweise durch einfaches Körnen der Oberseite des Lastverteilungselements 20, 30 bereitgestellt werden. Die Grundform des Lastverteilungselements ist beispielsweise im Wesentlichen kreisrund oder dreieckig. Unter "im Wesentlichen kreisrund" wird dabei z.B. auch eine Ellipse verstanden. Beispielsweise können sich die Längen von Haupt- und Nebenachsen der Ellipse um bis zu 5 % von einem arithmetischen Mittelwert aus Hauptachse und Nebenachse unterscheiden. Andere Konturen sind ebenso möglich. Wesentlich ist der Abstand der drei Lastübertragungselemente ap vom Lastaufnahmepunkt AP. Wie eingangs erläutert, definieren bestehende Hebellängenverhältnisse die jeweils am Lastübertragungspunkt ap, und letztlich auf die Proben 2, ausgeübte Kraft. Insofern ist eine im Wesentlichen zentrale Anordnung des Lastaufnahmepunktes, beispielsweise im Fall eines gleichseitigen Dreiecks, nur dann erforderlich, wenn an allen Lastübertragungselementen ap die exakt gleiche Last übertragen werden soll.

Gemäß einer für die gleichmäßige Belastung von bis zu 9 Proben mit einer identischen Andruckkraft bestimmten Ausführungsform der Vorrichtung sind die Abstände aller ersten Lastübertragungselemente zum betreffenden Lastaufnahmepunkt identisch. Zur Absicherung höchster Reproduzierbarkeit liegen die Lastübertragungselemente an Eckpunkten eines gleichseitigen Dreiecks und der Lastaufnahmepunkt im Zentrum des Außenkreises dieses Dreiecks. Zur gleichmäßigen Verteilung der auf die ersten Lastverteilungselemente einwirkenden Kraft, liegen auch die Lastübertragungselemente ap des zweiten Lastverteilungselements 30 an den Eckpunkten eines gedachten gleichseitigen Dreiecks. Genauso liegt der Lastaufnahmepunkt AP des zweiten Lastverteilungselements im Mittelpunkt des Außenkreises des gedachten gleichseitigen Dreiecks. Im benannten Fall eines gleichseitigen Dreiecks fallen die Mittelpunkte des Außenkreises und des Innenkreises des Dreiecks zusammen. Dem Fachmann ist leicht ersichtlich, dass über die Wahl der Abstände der Lastübertragungselemente ap zum jeweiligen Lastaufnahmepunkt AP eines Lastverteilungselements 20, 30 in einem Extremfall auf die maximal 9 synchron belastbaren Proben neun unterschiedliche, jedoch exakt definierte Lasten aufgebracht werden können. Ebenso können, beispielsweise für den Fall, dass alle Lastübertragungselemente ap ein-und-des-selben Lastverteilungselements 20, 30 einen identischen Abstand zum Lastaufnahmepunkt AP dieses Lastverteilungselements 20, 30 aufweisen, die besagten Lastübertragungselemente ap jeweils an Eckpunkten eines virtuellen gleichseitigen Dreiecks liegen, wobei die Lastaufnahmepunkte AP aller Lastverteilungselemente 20, 30 am Ort des Flächenschwerpunkts des betreffenden gedachten gleichseitigen Dreiecks liegen, sodass die maximal 9 Proben mit einer jeweils identischen Last beaufschlagt werden.

Eine auch unter zusätzlicher Klimatisierung reproduzierbare Belastung der bis zu 9 Proben mit einer jeweils identischen Last gewährleistet eine für alle ersten Lastverteilungselemente 20 identische Bauweise, wenn auch die Abstände der Lastübertragungselemente ap des zweiten Lastverteilungselements 30 an Eckpunkten eines gedachten gleichseitigen Dreiecks liegen. Hierbei wird unter identischer Bauweise der ersten Lastverteilungselemente die beschriebene Anordnung der Lastübertragungselemente ap und die Anordnung des Lastaufnahmepunktes AP im Flächenschwerpunkt des virtuellen gleichseitigen Dreiecks verstanden, der gleichzeitig der Mittelunkt von dessen Innenkreis und von dessen Außenkreis ist. Bei dieser Ausführungsform haben folglich alle Lastübertragungselemente ap der ersten Lastverteilungselemente 20 den gleichen Abstand r zum Lastaufnahmepunkt AP der jeweiligen ersten Lastverteilungselemente 20 und sind jeweils radialsymmetrisch zum Lastaufnahmepunkt LA angeordnet, während die Abstände R der Lastübertragungselemente ap des zweiten Lastverteilungselements 30 zum Lastaufnahmepunkt AP des zweiten Lastverteilungselements 30 ebenso gleich sind und diese Lastübertragungselemente ap radialsymmetrisch um den Lastaufnahmepunkt LA des zweiten Lastverteilungselements 30, der im Zentrum eines virtuellen Dreiecks liegt, angeordnet sind. Alle virtuellen Dreiecke, an deren Eckpunkten die Lastübertragungselemente ap liegen, sind gleichseitige Dreiecke. Die Lastauftragspunkte AP sind jeweils im Wesentlichen zentral angeordnet. Unter "im Wesentlichen zentral" wird hierbei eine Abweichung um maximal 5 % des Radius des betreffenden Außenkreises verstanden. Unter einem "im Wesentlichen gleichseitigen Dreieck" werden Dreiecke verstanden, deren Seitenlängen sich um $\pm$ 5 % von einer arithmetisch mittleren Seitenlänge der drei Seiten des Dreiecks unterscheiden.

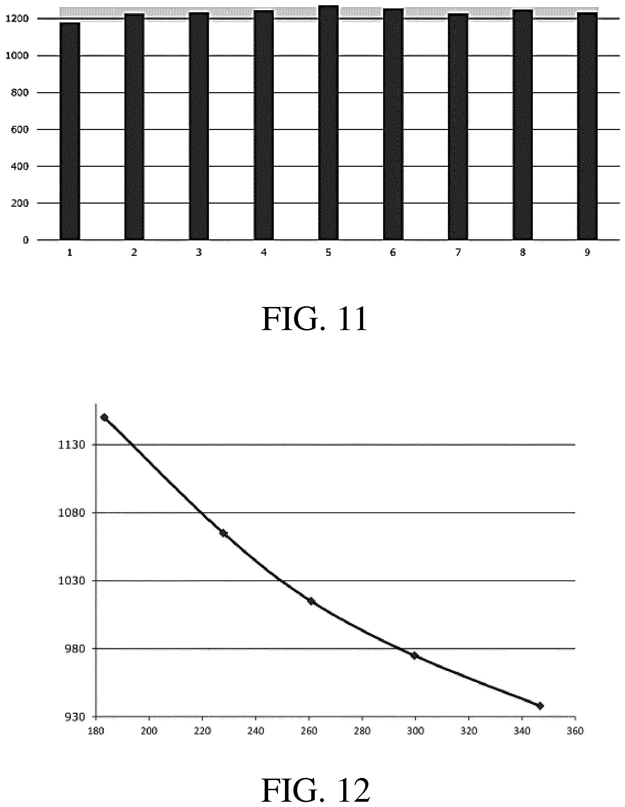

Die in Fig. 5 gezeigte Lastverteilungsvorrichtung 100 umfasst zwei Arten von kreisscheibenförmigen Lastverteilungselementen 20 und 30 mit insgesamt 12 Lastabgabepunkten ap für die Druckbelastung von 9 Proben. Die Lastübertragungselemente ap der ersten Lastverteilungselemente 20 sind in der Figur durchnummeriert. Diese Nummerierung entspricht den insgesamt 9 möglichen Proben, die mit der skizzierten Vorrichtung gleichzeitig einer definierten, hier identischen, Belastung ausgesetzt werden können (vgl. Fig. 11).

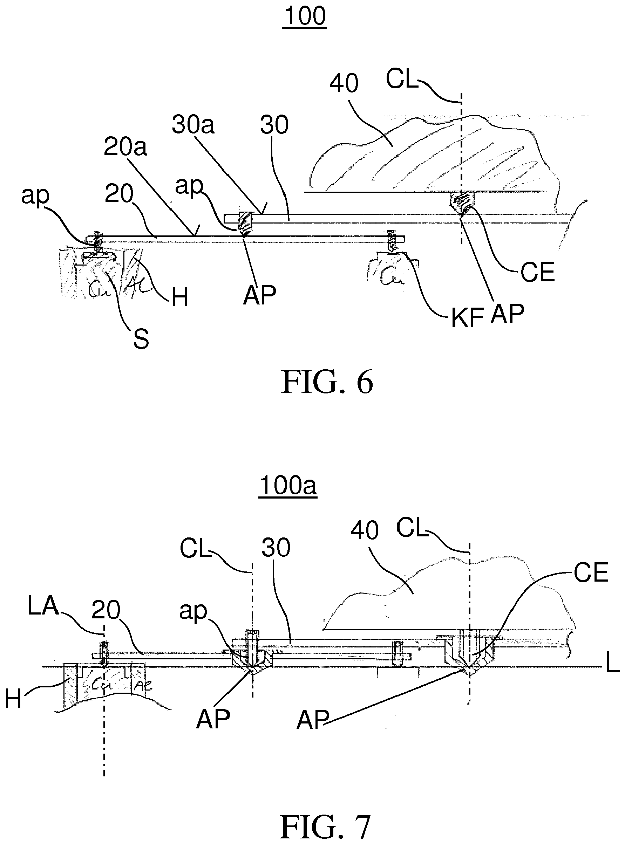

Fig. 6 zeigt den Querschnitt durch eine zunächst prototypische Ausführungsform der Vorrichtung 100 mit aufgesetztem Massekörper 40. Die Proben weisen hier einen aus Kupfer gefertigten Stempel S auf, der frei in einer aus Aluminium gefertigten Hülse H läuft. Gegenüber der Kontaktfläche KF des Probenstempels S ist die Fügefläche der Probe 2 angeordnet (hier nicht gezeigt). Auf den Kontaktflächen der insgesamt drei unter einem ersten Lastverteilungselement 20 angeordneten Proben (nur zwei sind gezeigt) ruhen die Lastübertragungselemente ap des ersten Lastverteilungselements 20. Auf dessen Oberseite 20a, also gegenüber den Lastübertragungselementen ap, ist der Lastaufnahmepunkt AP des ersten Lastverteilungselements 20 angeordnet. Im Kontakt mit jenem steht das Lastübertragungselement ap des zweiten Lastverteilungselements 30. Auf dessen Oberseite 30a wiederum ist, hier in Form einer Körnung, der Lastaufnahmepunkt AP des zweiten Lastverteilungselements 30 angeordnet. Im Kontakt, gewissermaßen im Eingriff, mit dem Lastaufnahmepunkt AP des zweiten Lastverteilungselements steht das Kontaktelement CE des Massekörpers 40.

Fig. 7 zeigt einerseits gesondert aneinander angepasste Lastaufnahmepunkte AP und Lastübertragungselemente ap. Die Lastaufnahmepunkte AP sind als Zentriereinsätze ausgeführt. Diese können beispielsweise aus Edelstahl ausgeführt sein. Wie ersichtlich sind die Lastaufnahmepunkte AP der ersten und der zweiten Lastverteilungselemente unterschiedlich dimensioniert. Virtuelle Achsen, entlang derer die auf die Lastverteilungselemente wirkenden Kräfte ausgeübt werden, sind mit CL gekennzeichnet. Die Symmetrieachse der Probe bzw. des Stempels, also die Lastachse entlang welcher die auf die Probe ausgeübte Kraft wirkt, ist mit LA bezeichnet. Andererseits zeigt Fig. 7 die Anordnung aller Lastaufnahmepunkte AP und der Kontaktfläche der Probe in einer Ebene. Vorteile dieser Ausführungsform erwachsen aus der Nivellierung von möglichen Höhenunterschieden der untersuchten Proben.

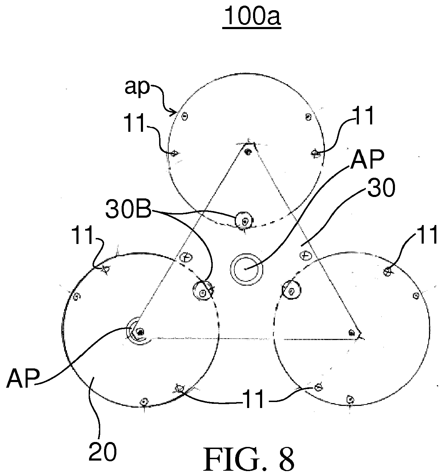

Fig. 8 zeigt eine Aufsicht der in Fig. 7 dargestellten Ausführungsform der Lastverteilungsvorrichtung 100a. Um die Zugänglichkeit der nach schraubbaren Lastübertragungselemente ap des ersten Lastverteilungselements 20 zu ermöglichen und - bei der hier gewählten absoluten Symmetrie der Probenanordnung - die Absenkung aller Lastaufnahmepunkte AP auf ein Niveau überhaupt zu ermöglichen, sind Ausnehmungen 30B in dem zweiten Lastverteilungselement 30 vorgesehen. Auch diese Ausnehmungen 30B sind symmetrisch angeordnet. Zusätzlich sind auch Führungselemente 11 für die ersten Lastverteilungselemente 20 gezeigt, für die wiederum in den drei ersten Lastverteilungselementen 20 entsprechende Ausnehmungen (Bohrungen) vorgesehen sind. Dies Bohrungen sind hier nicht gezeigt. Die Ausnehmungen, bzw. Bohrungen haben jeweils einen solchen Durchmesser, dass weder die Lastübertragungselemente ap noch die Führungselemente 11 mit den betreffenden Lastverteilungselementen 20, 30 in Kontakt kommen.

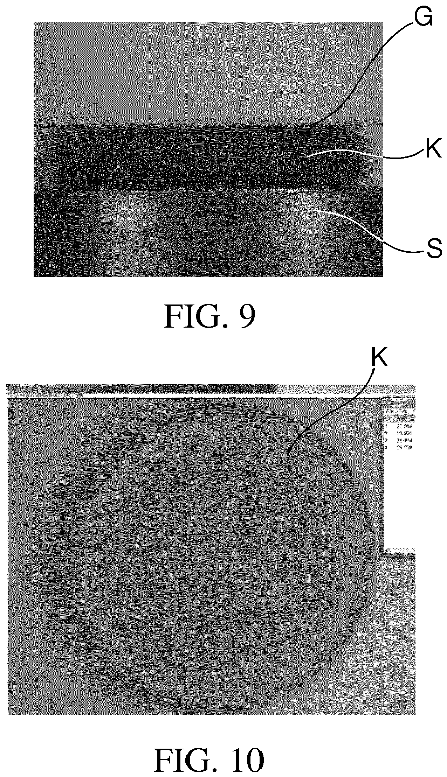

Fig. 9 zeigt ein Deckglas G, das über einer Kugel aus Knete K, die auf der Kontaktfläche eines Stempels S angeordnet war, nach der Beaufschlagung des so realisierten Stapels mit einer Andruckkraft. Die Knetkugel K verformte sich zu einer Schicht. Bei Annahme einer Volumenstabilität der Knete kann die auf die Probe einwirkende Kraft in Abhängigkeit von der mit einem Kontaktelement CE einer Lastaufbringungsvorrichtung 40 auf die Lastverteilungsvorrichtung 100, 100a applizierten Kraft beurteilt werden. Somit sollte es möglich sein, an Hand gemessener Knetschicht-Dicken die mit der vorgeschlagenen Lastverteilungsvorrichtung tatsächlich erreichte Kraftverteilung auf unterschiedliche Proben beurteilen zu können. In Fig. 11 sind entsprechende Versuchsergebnisse dargestellt.

Fig. 10 illustriert die Verwendung einer Bildverarbeitungssoftware zur Flächenmessung. In entsprechenden Vergleichsversuchen erwies sich die Messung von Knetschicht-Dicken als besser geeignet zur Beurteilung einer auf die Knetkugel ausgeübten Andruckkraft, als die Flächenmessung.

In Fig. 11 zeigt die Ordinate (y-Achse) die Knetschicht-Dicke in $\mu$m. Die x-Achse (Abszisse) zeigt die Position der betreffenden 9 Proben gemäß der Probenanordnung in Fig. 5. Die Proben 6, 8 und 9 wiesen eine größere Höhe als die übrigen Proben auf.

Aus Fig. 12 ist ersichtlich, dass die Dickenmessung, hier mittels Wirbelstrommessung mit Hilfe einer Fischerscope MMS Wirbelstromsonde ETAH3.3H durchgeführt, sich für die Schichtdickenmessung eignet und bei Kalibrierung zur Ermittlung der tatsächlich je Probe einwirkenden Kraft herangezogen werden kann.

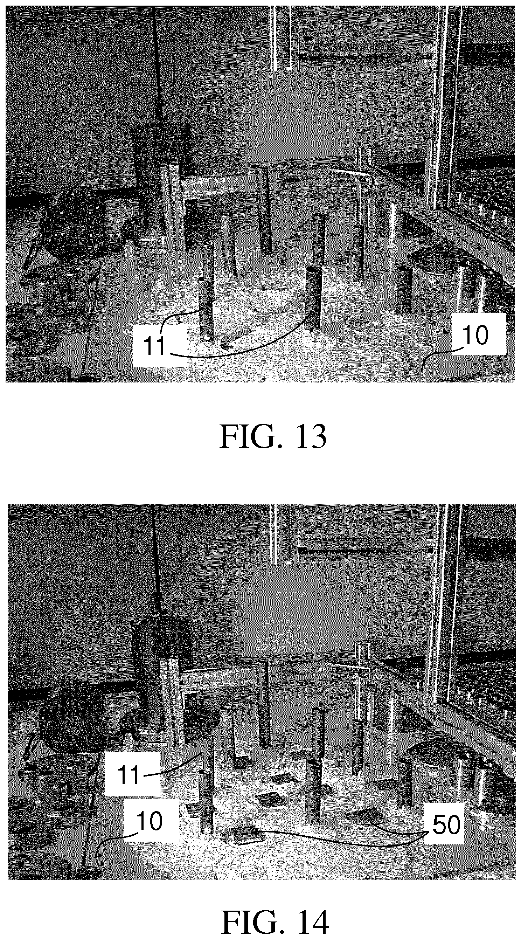

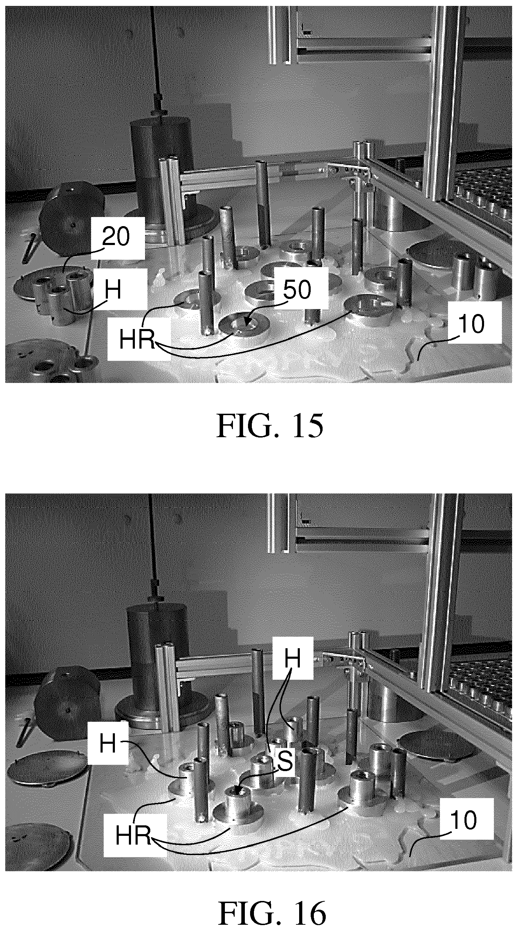

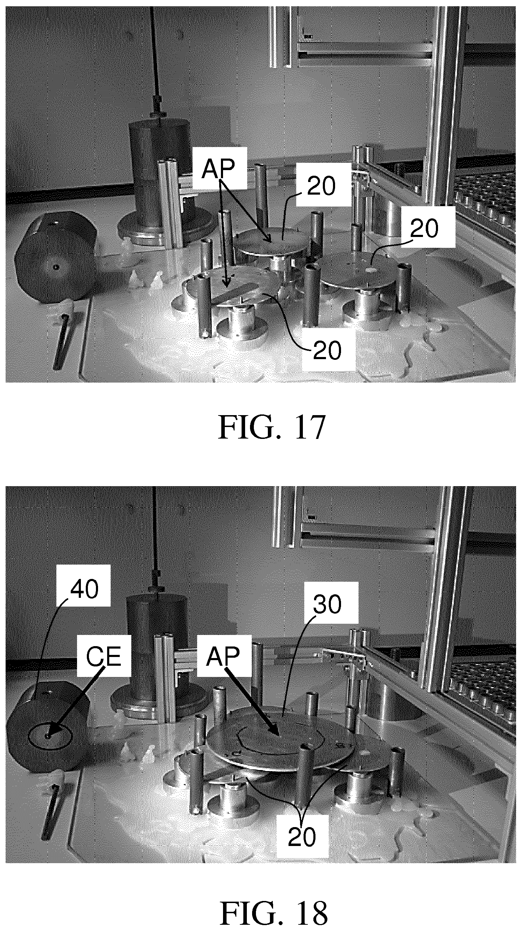

Die Fign. 13 bis 19 zeigen schrittweise den Aufbau einer prototypischen Ausführungsform der vorgeschlagenen Lastverteilungsvorrichtung 100. Die Figuren sind, als Abfolge betrachtet, selbsterklärend. In Fig. 17 kennzeichnen Pfeile das Kontaktelement CE des Massekörpers 40 und den Lastaufnahmepunkt AP des zweiten Lastverteilungselements 30, die im nachfolgenden Aufbauschritt der prototypischen Ausführungsform 100 miteinander in Kontakt gebracht werden.

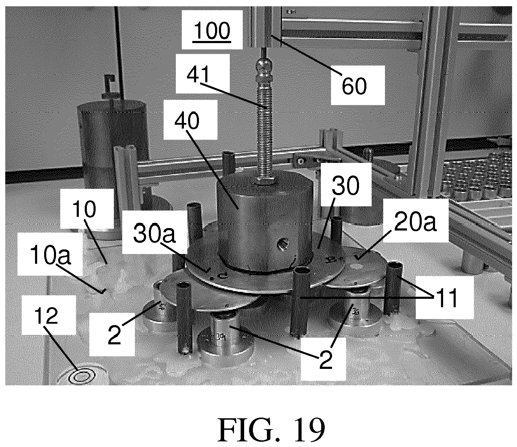

Die in prototypische Ausführungsform der Vorrichtung 100 umfasst eine Grundplatte 10 (hier Glas) mit mehreren an der Grundplatte 10 befestigten Führungselementen 11. Dabei wird letztlich ein Massekörper 40 mittels einer Haltestange 41, die von einem Rahmen 60 lotrecht gestützt ist, so gehalten, dass die gesamte Masse des Massekörpers 40 auf dem zentral angeordneten (in Fig. 19 verdeckten) Lastaufnahmepunkt AP auf der Oberfläche 30a des zweiten Lastverteilungselements 30 ruht. Eine Dosenlibelle 12 (links unten im Bild) dient zur Überprüfung einer waagerechten Ausrichtung der Grundplatte 10 mit den darauf angeordneten Proben 2, die jeweils einen auf einem Substrat 50 angeordneten Stempel S umfassen. Der Stempel läuft in einer Hülse H, welche durch einen Stützring HR auf der Grundplatte 10 stabilisiert wird. Rechts im Bildhintergrund sind vorbereitete Probenstempel zu erkennen.

Allen vorgeschlagenen Ausführungsformen liegt die Stabilität eines Dreibeins bzw. einer auf drei Punkten lagernden Platte zu Grunde. Gemäß einer typischen Ausführungsform der hier vorgeschlagenen Vorrichtung 100, 100a werden mehrere Proben 2 synchron so belastet, dass in jede Probe 2 eine definierte Kraft eingeleitet wird. Die an den drei Punkten jeweils eingeleitete Kraft richtet sich nach den Abständen der Lastübertragungselemente ap gegenüber einem zentralen Lastaufnahmepunkt AP und den daraus resultierenden Hebelverhältnissen. Gemäß einer Ausführungsform wird jede Probe mit exakt der gleichen Andruckkraft belastet, wenn die drei Abstände der Lastübertragungspunkte ap zum Lastaufnahmepunkt AP eines jeden Lastverteilungselementes 20, 30 gleich sind. Dabei wird unter gleicher Kraft eine solche Kraft verstanden, die im Rahmen der Messwertstreuung von unabhängig voneinander durchgeführten Einzel-Lastversuchen gleich ist. Die auf jede Probe 2 der Vielzahl von Proben ausgeübte definierte Kraft wirkt jeweils in Richtung einer Längsachse LA der Probe 2, wobei die Längsachse LA jeweils rechtwinklig zu den Fügeflächen der Proben 2 verläuft. Die Kraft wirkt also in einer orthogonal zur Ebene einer Grundplatte 10 verlaufenden Richtung, wenn die oben erwähnten Stapel auf der Grundplatte 10 so angeordnet sind, dass die Fügeflächen parallel zur Grundplatte 10 orientiert sind. Hieraus resultiert ein für alle Proben im Rahmen der erwähnten Messwertstreuung gleicher Anpressdruck, wenn alle Stapel jeweils zumindest eine Fügefläche mit einem für alle Proben 2 identischen Flächeninhalt aufweisen.

Der Stempel S, umfassend die dem Substrat zugewandte Fügefläche, kann zweckmäßig in einer Hülse H angeordnet sein, wobei die Hülse H zumindest einen Teil des Stempels S umgibt. Das dient vorteilhaft zur Stabilisierung einer vertikalen Position des Stempels S auf dem mit dem Fügemittel versehenen Substrat. Zur zusätzlichen Stabilisierung kann ein Stützring HR vorgesehen sein, der die Hülse H mit dem darin entlang einer zentralen Symmetrieachse LA frei beweglichen Stempel S über dem Substrat 50 stabilisiert, indem er sie an ihrer der Grundplatte 10 zugewandten Seite umgibt oder aufnimmt. Eine beispielhafte Ausführungsform eines in einer Hülse H laufenden Stempels (dort als Massekörper mit Fügeflächenmodul bezeichnet) ist in DE 10 2013 105 140 A1 beschrieben. Deren Offenbarung hinsichtlich der Anordnung eines Fügemittels zwischen der Fügefläche eines Substrates und der Fügefläche eines Fügeflächenmoduls, der zusammen mit einem Massekörper als Stempel S aufgefasst werden kann, wird in die vorliegende Patentbeschreibung durch Verweis aufgenommen.

Das Substrat 50 kann beispielsweise ein Festkörper in Form eines Materialmusters sein. Das Substrat 50 ist typischerweise ausgewählt unter einer Keramik, einem Glas, einem Metall, einer metallischen Legierung, einem Halbleiter, einem Laminat, einem Verbundwerkstoff, einem Mineral, einem Natur- oder Kunststein, einem mineralischen Werkstoff, einem Kristall, einem Harz oder einem Kunststoff. Das Substrat 50 kann in Form eines Halbzeugs oder in Form einer Folie vorliegen.

Gemäß einer typischen Ausführungsform ist ein radialer Abstand "r" der Lastübertragungselemente "ap" des ersten Lastverteilungselements 20 von einer gedachten Achse CL, die rechtwinklig zum ersten Lastverteilungselement 20 durch den Lastaufnahmepunkt AP des ersten Lastverteilungselements 20 verläuft, kleiner als oder gleichlang ist wie der radiale Abstand R der Lastübertragungselemente ap des zweiten Lastverteilungselements 30 von einer gedachten Achse CL, die rechtwinklig zum zweiten Lastverteilungselement 30 durch den Lastaufnahmepunkt AP des zweiten Lastverteilungselements 30 verläuft.

Vorteile dieser Ausführungsform bestehen einerseits in der erreichbaren Gleichbelastung einer Vielzahl von Proben bei Fügeversuchen. Hiervon ausgehend ergeben sich weitere Vorteile mit der Zuverlässigkeit damit erhobener Befunde zur Festigkeitsprüfung unterschiedlicher Proben. Die beschriebene pyramidenartige Anordnung einer Lastverteilungsplatte, hier verallgemeinernd als Lastverteilungselement bezeichnet, mit einem oberseitigen zentralen Lastaufnahmepunkt AP und drei unterseitigen Lastabgabepunkten ap, die hier verallgemeinernd als Lastübertragungselemente ap bezeichnet werden, macht das Grundprinzip der vorgeschlagenen Vorrichtung aus. Die Kombination von drei ersten Lastverteilungselementen 20 und einem auf diesen dreien ruhendem zweiten Lastverteilungselement 30 gleicher oder ähnlicher Bauart bildet hingegen das Kernstück der vorgeschlagenen Lastverteilungsvorrichtung 100, 100a.

Dabei sind gemäß einer Ausführungsform 100 die Lastübertragungselemente ap radialsymmetrisch zu dem zentralen Lastaufnahmepunkt AP angeordnet und ruhen ihrerseits jeweils auf Lastaufnahmepunkten AP eines Tripletts von ersten Lastverteilungselementen 20, wobei die ersten Lastverteilungselemente 20 jeweils einen oberseitigen zentralen Lastaufnahmepunkt AP und drei radialsymmetrisch angeordnete unterseitige, also vom Lastaufnahmepunkt AP wegweisende, bzw. ihm gegenüberliegende Lastabgabepunkte ap umfassen. Die drei Lastübertragungselemente ap der drei ersten Lastverteilungselemente 20 ruhen jeweils zentral auf einer Probe 2, wobei die Probe 2 beispielsweise einen Stempel S umfasst, dessen Fügefläche einer Kontaktfläche KF gegenüber liegt und auf einer Fügemittelschicht aufsitzt, die jeweils auf einem Substrat 50 angeordnet ist. Die Vorrichtung 100, 100a vereint die grundlegende Standfestigkeit eines Dreibeins mit der symmetriebedingten Verteilung einer zentral aufgebrachten Last an jedem der Lastübertragungselemente ap der Lastverteilungselemente 20, 30: Bei gleich langen Hebelarmen wird eine Drittelung der vom Lastaufbringungsmittel 40 applizierten Kraft F durch jedes der Kraftverteilungselemente 20, 30 bewirkt. Im Endeffekt resultieren für die beschriebene Stapelung des zweiten Lastverteilungselements 30 über einem Triplett von ersten Verteilungselementen 20 insgesamt 9 Lastübertragungselemente ap für bis zu neun Proben 2.

Vorteilhaft können mit der vorgeschlagenen Vorrichtung 100, 100a also bis zu neun Proben 2 für eine definiert gleiche Zeit mit einer definiert gleichen Kraft, gegebenenfalls einem definiert gleichen Kraftverlauf, beaufschlagt werden. Die vorgeschlagene Vorrichtung 100, 100a ist vorteilhafterweise auch unter einfachsten Bedingungen problemlos verwendbar und bedarf lediglich einer Lastaufbringungsvorrichtung 40 (z.B. eines Massekörpers) und einer ebenen Grundplatte 10, die waagerecht orientiert ist. So kann die aufgebrachte Last gleichmäßig auf bis zu 9 Proben, oder z.B. 8 Proben und einen Probenersatzkörper ("dummy"), 7 Proben und zwei Probenersatzkörper, 6 Proben und 3 Probenersatzkörper usf. aufgebracht werden. In der Mehrprobenprüfung sind gemäß dem "Guide to the Expression of Uncertainty in Measurement (GUM)" bzw. diesbezüglicher Normen fünf gültige Messungen zur Ermittlung von Messunsicherheiten erforderlich.

Die mit der Vorrichtung 100, 100a erhältliche Zahl von bis zu 9, oder - bei Verwendung eines dritten Lastverteilungselements - gar von bis zu 27 - Proben mit jeweils identischer Belastungshistorie beschleunigt die Bereitstellung von Proben zur Durchführung statistisch verwertbarer Versuche. In anschließenden Versuchen erhältliche Befunde betreffen, beispielsweise, die Festigkeit von Klebeverbindungen zwischen einer Fügefläche und einem Substrat, insbesondere die Vergleichbarkeit von dabei erhaltenen Ergebnissen zur Zuverlässigkeit von Klebeverbindungen oder zu deren Optimierung. Ein weiterer Vorteil besteht im erhöhten Probendurchsatz. Zur Sicherung der Vergleichbarkeit von Testergebnissen unterschiedlicher Testläufe ist lediglich ein jeweils identischer Stempel S zu verwenden. Vorteilhaft kann die Vorrichtung 100, 100a einfach und leicht mit Proben 2 bestückt werden. Die Proben 2 können nach dem Fügen leicht und schnell wieder entnommen werden, indem die Lastverteilungselemente 20, 30 abgenommen werden. Eventuell während des Versuchs aus Probenstapeln ausgetretene und ausgehärtete Kleberreste können leicht entfernt werden, ohne die Vorrichtung selbst zu verunreinigen.

Vorteile des vorgeschlagenen Verfahrens bestehen also darin, dass universelle Fügeflächenmodule, beispielsweise mit einem Gewindestift versehene Fügeflächenmodule, verwendet werden können, um die Festigkeit einer Fügeverbindung in einer angepassten Prüfvorrichtung unter Standardbedingungen prüfen zu können, nachdem jeweils interessierende Materialpaarungen (Proben 2) jeweils in Form eines Substrates 50, das unter Verwendung eines Fügemittels mit einem standardisierten Fügeflächenmodul stoffschlüssig verbunden ist, unter einem Lastübertragungselement ap des ersten Lastverteilungselements 20 angeordnet wurden.

Dabei kann das Fügemittel beispielsweise ausgewählt sein unter einem Klebstoff, einem Kleber, einem Zement, einem Lot, einem metallischen Lot, einem Glaslot, oder einer Lotpaste oder entsprechender Reservoire. Das Fügemittel bildet entweder beim Aushärten, beim Abbinden, beim Reagieren, oder beim Umschmelzen eine stoffschlüssige Verbindung zwischen einem Substrat und einer Fügefläche des Stempels in Form eines ausgehärteten Klebstoffs oder Klebers, eines abgebundenen Zements, eines umgeschmolzenen Lots oder einer Legierung mit einer intermetallischen Phase, eines Polymers, eines Harzes oder anderer dem Fachmann bekannter homogener oder heterogener Feststoffe aus.

Die vorgeschlagene Vorrichtung umfasst eine Kombination von Lastverteilungselementen gleicher oder unterschiedlicher Größe. Eine äußere Form der Lastverteilungselemente ist dabei nachrangig. Geeignete Lastverteilungselemente sind beispielsweise Polyeder, kreisförmige Platten, dreieckige Platten oder aus einer Platte geformte Elemente, die bei einer Projektion die Form eines Y, eines Y, eines y, oder eines $\lambda$ oder diesen ähnliche Formen aufweisen. Bevorzugt sind die Elemente starr.

Entscheidend ist das Vorhandensein eines Lastaufnahmepunktes AP der innerhalb eines durch die genau drei Lastübertragungselemente definierten virtuellen Dreiecks liegt. Die genau drei Lastübertragungselemente ap liegen dem Lastaufnahmepunkt AP gegenüber.

So wird erreicht, dass eine auf den zentralen Lastaufnahmepunkt ausgeübte Kraft, gemäß einem Verhältnis der Abstände zwischen dem zentralen Lastaufnahmepunkt und dem jeweiligen Lastübertragungselement, dem Hebelgesetz folgend, anteilig und damit definiert, auf Proben übertragen werden kann, wenn jeweils eine Probe im mechanischen Kontakt mit einem ihr zugedachten Lastübertragungselement ap einer der drei ersten Lastverteilungselemente 20 steht.

Die Verwendung der Vorrichtung 100, 100a gestattet es beispielsweise, die Reproduzierbarkeit fachüblicher Verfahren zur Festigkeitsprüfung von Klebeverbindungen zu verbessern, indem die je Probe ausgeübte Andruckkraft unabhängig von der jeweiligen Höhe der Probe bzw. des Schichtaufbaus aus Fügeflächenmodul / Klebstoffschicht / Substrat ist.

Die beschriebene Vorrichtung 100, 100a und das vorgeschlagene Verfahren sind gegenüber vorbekannten Lösungen zuverlässiger. Gegenüber einer mit einem Hydrauliköl betriebenen Vorrichtung wird das Risiko, welches von nahezu unvermeidlichen Kriechölfilmen ausgeht, vermieden. Vorzugsweise kann mit der beschriebenen Vorrichtung 100, 100a eine Vielzahl Proben 2 typischer Durchmesser im Zentimeter-Bereich oder darunter gleichzeitig mit identischem Anpressdruck verklebt oder andersartig stoffschlüssig oder formschlüssig gefügt bzw. verbunden werden, wobei bezüglich der Probenhöhe sowohl mikroskopische Höhentoleranzen als auch gewisse makroskopische Unterschiede (konstruktiv bedingte Unterschiede in den Probenhöhen) zu keinen Einschränkung der Reproduzierbarkeit führen. Bisherige Mehr-Proben-Kleb-Vorrichtungen erfordern einen hohen Fertigungsaufwand und sind nur für einen eingeschränkten Kraft- und Temperaturbereich geeignet. Bekannte Vorrichtungen bergen die Gefahr einer Klebflächenkontamination (mögliche Undichtheiten bei Notwendigkeit der Verwendung von Hydraulikölen). Die Funktionalität bekannter Vorrichtungen ist weiter eingeschränkt durch gegenläufige Randbedingungen (leichtgängige und gleichzeitig dichte Anpresszylinder-Dichtung) und deren Toleranzen sind störanfällig. Zudem sind komplexe Abhängigkeiten der Kraft-Temperaturverläufe mit nicht vollständig kompensierbarem Druckanstieg nachteilig.

Die beschriebene Vorrichtung stellt hingegen vorteilhaft identische Klebbedingungen (gleicher Kraft-, Temperatur- und Luftfeuchtigkeitsverlauf zur gleichzeitigen Klebung von mindestens 9 Proben), auch für unterschiedlich hohe Proben bereit und ist über weite Bereiche der variablen Parametern Kraft, Druck und Temperatur geeignet. Dabei soll der Andruckpunkt zentral auf den Proben sein und mit dem Flächenschwerpunkt der Probenstirnfläche übereinstimmen.

Die beschriebenen Ausführungsformen zeichnen sich dadurch aus, dass vorteilhaft rein mechanisch-physikalischer Prinzipien (Hebelprinzip) ohne Verwendung hydraulischer (ölfrei) und elektronischer Komponenten (z.B. Drucksensoren) genutzt werden. Das ermöglicht eine mehrstufige Kraftverteilung über dreiarmige Hebel. Bevorzugt wird dabei eine jeweils punktsymmetrische Anordnung von drei gleichlangen Hebelarmen, die aufgrund mechanischer Prinzipien zu vollständig identischen Bedingungen (Andruckkraft, Temperatur, Andruckdauer, und ggf. identischem Druck-Zeit-Verlauf bei einer simultanen Mehr-Proben-Klebung führt. Somit wird eine simultane Klebung von mindestens 9 Proben unter identischen Klebbedingungen über einen sehr großen Parameterraum (bezüglich Kraft bzw. Druck, Temperatur, Probengröße) bei einfacher Anwendbarkeit und metrologischer Rückführbarkeit gewährleistet. Wirtschaftliche Vorteile umfassen die Umsetzung der Prinzipien der Erfindung unter geringem Material- und Fertigungsaufwand. Die vorgeschlagene Vorrichtung erfordert praktisch keine Wartung und kommt ohne Verschleißteile aus.

Aspekte der beschriebenen Ausführungsformen betreffen mithin:

1. Mehrstufige, punktsymmetrische Dreipunkt-Kraftverteilung;

2. Planare Angriffspunktverteilung aller Kraftübertragungen;

3. Toleranz gegen Probenhöhenabweichungen;

4. Temperaturunabhängigkeit über 500 K durch symmetrische Geometrie und gleichen, zur Fertigung der Lastverteilungselemente verwendeten Werkstoff;

5. Mehr-Proben-Klebung mit identischen Parametern auch im Zeitverlauf;

6. Probenhöhenunterschiede sind kompensierbar;

7. Prinzipbedingte Kraftgleichverteilung auch für Kräfte unter 0,5 N pro Probe;

8. Erweiterbarkeit für größere Probenzahl, z.B. bis zu 27 Proben oder (bei Verwendung weiterer zusätzlicher Lastverteilungselemente) bis zu 81 Proben.

EXPERIMENTELLE BEFUNDE

Die an Hand der Fign. 9-12 mit einer radialsymmetrischen Anordnung der Lastübertragungselemente ap um einen zentralen Lastaufnahmepunkt AP illustrierte Verwendung von Knete als beispielhaftem Fügemittel der Vorrichtung ergab, dass Unterschiede in der Probenhöhe von $\pm$1mm und $\pm$2 mm ohne signifikanten Einfluss auf die Gleichmäßigkeit der Kraftverteilung sind. Typische Probenhöhen liegen beispielsweise im Bereich von 10 mm bis 50 mm. Die Dicke aller Klebschichten lag gemäß einem praktischen Ausführungsbeispiel bei 62 $\mu$m $\pm$ 6 $\mu$m und es konnte keine Korrelation zur Probenhöhe festgestellt werden. Der Messbereich zur Ermittlung der effektiv einwirkenden Kraft mittels Messung der Schichtdicke einer zu einer Scheibe deformierten Knetkugel lässt sich über die Menge der zu einer Kugel geformten Knete einstellen. Fig. 12 zeigt entsprechende Ergebnisse im Bereich einer Last von 180 g bis fast 350 g für eine aus 30 mg Knete geformte Kugel bei 23,5 °C.

Die Fig. 11 hingegen belegt den fehlenden Einfluss minimaler Höhenabweichungen der Proben. Von den in Fig. 5 an angezeigten Positionen 1-9 angeordneten Proben 1-9 hatten die Proben 6, 8 und 9 jeweils eine größere Höhe als die übrigen Proben. Es ist ersichtlich, dass alle Proben eine nahezu identische Knetschichtdicke aufwiesen, und die abweichende Probenhöhe keinen Einfluss auf das Messergebnis im Rahmen der Messwertstreuung der Einzelversuche, d.h. < 3% hatte.

Bezüglich der Masseverteilung ergeben sich für beispielhafte Stempel (Cu) mit Fügefläche 37 g/Probe. Die kreisrunden Duraluminiumscheiben und 9 Schrauben, die gemäß der prototypischen Ausführungsform als Lastverteilungselemente eingesetzt wurden, wiesen eine Gesamtmasse von 123 g auf. Hieraus ergeben sich 14 g/Probe. Der zentral auf das zweite Lastverteilungselement 30 aufgesetzte Massekörper hatte eine Masse von 2060 g. Hieraus ergibt sich eine Masse von 229 g/Probe. In der Summe lagerten so 280 g/Probe, was 2,75 N bzw. 35 kPa entspricht.

Die beschriebenen Ausführungsformen der Lastverteilungsvorrichtung sind angepasst zur Gleichverteilung einer Anpresskraft für mindestens 9 Proben im Druckbereich von 2kPa bis 70 MPa in einem weiten Temperaturbereich (mindestens -196 °C bis + 300 °C auf rein mechanischem Wege.

Für das in Fig. 4 gezeigte Lastverteilungselement wurden Abweichungen von einem idealen gleichseitigen Dreieck ermittelt, indem der tatsächliche Abstand der drei Lastübertragungselemente apl, ap2 und ap3 vom Zentrum AP gemessen wurde. Es ergaben sich:

| | $ap_1$ | $ap_2$ | $ap_3$ | Mittelwert |
|---|---|---|---|---|
| **Distanz zu AP [mm]** | 40,04 | 39,98 | 39,77 | 39,93 |
| **Differenz zum Mittelwert [mm]** | 0,11 | 0,05 | -0,16 | |
| **Differenz zum Mittelwert [%]** | 0,27 | 0,13 | -0,4 | |

Bei Zusammenschau mit Fig. 1 soll für $s_1 = s_2$ gelten: $F_1 = F/2$ und äquivalent hierzu auch für $s_1 = s_2 = s_3$ soll $F_1 = F/3$ sein.

Zur Abschätzung der Unsicherheit wird der oben ermittelte Mittelwert des Radius r = s = 39,99 mm angesetzt. Die größte tatsächliche Abweichung Δs/s = 0,004. In erster Näherung entspricht das der Kraftabweichung, die sich wie folgt berechnen lässt:

$$F_n = F \cdot (s/2 \, / \, (s_n + s/2))$$

unberücksichtigt ist dabei die Änderung der beiden anderen Kräfte!

$$\Delta F_n = F_n - F \cdot (s/2 \, / \, (s_n - \Delta s_n + s/2))$$
$$= (0,5 \, / \, 1,004 + 0,5) = 0,333 \, F - 0,33245 \, F = 0,00089 \approx 0,1 \, \% \, F$$

Der herstellungsbedingten geometrischen Abweichungen der Lastverteilungselemente führen also zu Abweichungen in den Kräften von bis zu 0,1% und sind damit komplett vernachlässigbar.

Zur Beurteilung der Lastverteilung durch ein Lastverteilungselement auf drei Punkte bzw. Lastübertragungselemente $ap_1$ bis $ap_3$ (vgl. Fig. 4) wurden jeweils zwei Punkte festgelegt und der verbleibende gemessen (gewogen mit einer Sartorius-Waage 1213MP):

| Lastübertragungselement: | $ap_1$ | $ap_2$ | $ap_3$ | | |
|---|---|---|---|---|---|
| | 690,3 | 680,7 | 690,0 | | |
| | 688,7 | 679,4 | 688,7 | | |
| | 688,6 | 680,6 | 689,2 | | |
| | 689,0 | 676,6 | 690,1 | | |
| | 687,3 | 683,9 | 688,3 | | |
| | 690,4 | 678,0 | 691,0 | | |
| | 688,6 | 679,4 | 686,2 | | |
| | | 678,8 | | | |
| | | 679,2 | | | |
| | | 679,3 | | | |
| | | | | Summe | Mittelwert |
| **Mittel (g)** | 689,0 | 679,6 | 689,1 | 2057,6 | 685,9 |
| **Standardabweichung (g)** | 1,1 | 1,9 | 1,6 | | 1,5 |
| **Standardabweichung (%)** | 0,16 | 0,28 | 0,23 | | 0,22 |
| **Differenz v. Mittelw. %** | 0,45 | -0,92 | 0,47 | | |
| **Masse des Gewichtes (g):** | | | | 2060,6 | |
| **Differenz v. Mittelwert %** | 0,3 | -1,0 | 0,5 | | |

(fortgesetzt)

| Lastübertragungselement: | $ap_1$ | $ap_2$ | $ap_3$ | | |
|---|---|---|---|---|---|
| (erster Versuch, Messingschrauben) | | | | | |
| **Distanz ap zu AP (mm)** | 40,04 | 39,98 | 39,77 | | 39,93 |
| Diff. **Mittelwert (g)** | 0,11 | 0,05 | -0,16 | | |
| **Diff. Mittelwert (%)** | 0,27 | 0,13 | -0,40 | 0,36 | |
| | | | | | |
| **Abstand gegenüber*** | 68,78 | 69,32 | 69,26 | | 69,12 |
| **Diff. Mittelwert (g)** | -0,34 | 0,20 | 0,14 | | |
| **Diff. Mittelwert (%)** | -0,49 | 0,29 | 0,20 | | |
| **\* z.B. gg.$ap_1$: $ap_2$ - $ap_3$** | | | | | |

Die in diesem orientierenden Versuch beobachtete Differenz von 3 x 1,0 g geht möglicherweise auf Reibung an den Führungselementen zurück, stellt jedoch die Eignung der Vorrichtung und des Verfahrens nicht in Frage.

Ein wesentlicher Vorteil der vorgeschlagenen Vorrichtung und das vorgeschlagenen Verfahrens besteht darin, dass gemäß einer Ausführungsform wahlweise bis zu 9 oder bis zu 27 Proben gleichzeitig mit einem für alle Proben identischen Anpressdruck beaufschlagt werden können. Dabei kann in Abhängigkeit von der verwendeten Lastaufbringvorrichtung der Anpressdruck reproduzierbar eingestellt werden, ist somit definiert und nach geeigneten Kalibrierverfahren bestimmbar.

Weiterhin wird durch die Kombination standardisierter Stempel S mit daran angepassten Führungshülsen H bzw. dem darauf basierenden Verfahren erreicht, dass für Substrate und Probenstempel gleicher Abmessungen vollständig identische Andruckkräfte erreichbar sind. Die Vorrichtung und das Verfahren sind für unterschiedliche Anwendungen der Fügetechnik, insbesondere für das stoffschlüssige Fügen, aber auch für das Prägen, Einprägen und Einpressen geeignet. Für letztgenannte Ausführungsformen ist die Fügefläche des Stempels als Prägefläche bzw. der Stempel als Indenter ausgebildet.

Vorteilhafterweise ist die Vorrichtung bzw. das vorgeschlagene Verfahren dann einsetzbar, wenn eine parallele Beaufschlagung einer Vielzahl von Objekten mit einem identischen Anpressdruck bzw. -kraft erforderlich ist, wie beispielsweise für Anwendungen in der Materialprüfung für die Klebetechnik, bei der Festigkeitsprüfung oder in anderen Bereichen der Materialforschung und des Qualitätsmanagements.

Vorteilhafte Kombinationen der vorstehend genannten Ausführungsformen ermöglichen die Bereitstellung einer Vorrichtung und deren Verwendung gemäß eines standardisierbaren Konzepts, insbesondere eines Prüfverfahrens. Die Standardisierbarkeit beruht einerseits auf dem definierten und auf alle zu fügenden Proben synchron einwirkenden Anpresskraft, unabhängig von der Probenhöhe. Andererseits gestatten vorteilhafte Kombinationen der beschriebenen Ausführungsformen die gleichzeitige Behandlung mehrerer Proben in einem Fügevorgang und die Steigerung des Probendurchsatzes bei der Materialprüfung oder eine solche vorbereitende Probenbehandlungsschritte.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

BEZUGSZEICHENLISTE

| | |
|---|---|
| 2 | Probe |
| 10 | Grundplatte |
| 10a | Oberfläche der Grundplatte |
| 100, 100a | Lastverteilungsvorrichtung |
| 11 | Führungselement |
| 12 | Dosenlibelle, Wasserwaage |
| 20 | erstes Lastverteilungselement |
| 20a | Oberseite des ersten Lastverteilungselements |
| 200 | Kit, Bausatz |

| | |
|---|---|
| 30 | zweites Lastverteilungselement |
| 30a | Oberseite des zweiten Lastverteilungselements |
| 30B | Bohrung im zweiten Lastverteilungselement für Führungselement 11 |
| 40 | Lastaufbringvorrichtung, z.B. Massekörper |
| 41 | Haltestange |
| 50 | Substrat |
| 60 | Rahmen |
| AP | Lastaufnahmepunkt eines beliebigen Lastverteilungselements |
| ap | Lastübertragungselement eines beliebigen Lastverteilungselements |
| CE | Kontaktelement der Lastaufbringungsvorrichtung |
| CL | gedachte Achse, Linie |
| F | aufgenommene Kraft, Last |
| $F_1$, $F_2$ | abgegebene, übertragene Kraft |
| G | Glas, Mikroskopie-Objektträger |
| H | Hülse, Führungshülse für Stempel |
| HR | Stützring |
| K | Knete (Beispiel für Fügemittel) |
| KF | Kontaktfläche des Stempels |
| L | Ebene |
| LA | Symmetrieachse der Probe bzw. des Stempels, Lastachse |
| r | Abstand eines Lastübertragungselements ap eines ersten Lastverteilungselements zum Lastaufnahmepunkt AP des ersten Lastverteilungselements, Radius eines Kreises auf dem drei Lastübertragungselemente ap eines ersten Lastverteilungselementes gemäß einer Ausführungsform liegen |
| R | Abstand eines Lastübertragungselements ap eines zweiten Lastverteilungselements zum Lastaufnahmepunkt AP des zweiten Lastverteilungselements, Radius eines Kreises auf dem drei Lastübertragungselemente ap eines zweiten Lastverteilungselementes gemäß einer Ausführungsform liegen |
| S | Stempel |
| $s_1$, $s_2$ | Lasthebel |

**Patentansprüche**

1. Lastverteilungsvorrichtung (100, 100a) zum synchronen Aufbringen einer definierten Andruckkraft auf eine Vielzahl von Proben (2), umfassend:

   - drei erste Lastverteilungselemente (20), und
   - ein zweites Lastverteilungselement (30),

   wobei jedes der drei ersten Lastverteilungselemente (20) und das zweite Lastverteilungselement (30) einen Lastaufnahmepunkt (AP) und drei, dem jeweiligen Lastaufnahmepunkt (AP) gegenüber liegende Lastübertragungselemente (ap) umfasst;
   wobei das zweite Lastverteilungselement (30) so in Bezug zu den drei ersten Lastverteilungselementen (20) angeordnet ist, dass jedes der drei Lastübertragungselemente (ap) des zweiten Lastverteilungselements (30) mit dem Lastaufnahmepunkt (AP) eines der drei ersten Lastverteilungselemente (20) in Kontakt steht, sodass eine auf den Lastaufnahmepunkt (AP) des zweiten Lastverteilungselements (30) ausgeübte Kraft definiert auf die Lastaufnahmepunkte (AP) der drei ersten Lastverteilungselemente (20), und von dort aus definiert auf die Lastübertragungselemente (ap) der drei ersten Lastverteilungselemente (20) verteilbar ist.

2. Lastverteilungsvorrichtung (100, 100a) nach Anspruch 1, wobei der Lastaufnahmepunkt (AP) eines jeden Lastverteilungselements (20, 30), das ausgewählt ist unter den drei ersten Lastverteilungselementen (20) und dem zweiten Lastverteilungselement (30), in einem Flächenschwerpunkt eines virtuellen Dreiecks liegen, wobei das virtuelle Dreieck durch die drei Lastübertragungselemente (ap) jedes Lastverteilungselements (20, 30) definiert ist, und wobei die drei Lastübertragungselemente (ap) Eckpunkte des virtuellen Dreiecks sind.

3. Lastverteilungsvorrichtung (100, 100a) nach Anspruch 1 oder 2, wobei eine äußere Form zumindest eines der Lastübertragungselemente (ap) der zweiten Lastverteilungselemente (30) angepasst ist an die äußere Form des Lastaufnahmepunktes (LA) zumindest eines der ersten drei Lastverteilungselemente (20), sodass das zumindest eine Lastübertragungselement (ap) des zweiten Lastverteilungselements (30) mit dem Lastaufnahmepunkt (LA) des zumindest einen ersten Lastverteilungselements (20) in einen Eingriff bringbar ist.

4. Lastverteilungsvorrichtung (100, 100a) nach einem der vorstehenden Ansprüche, wobei zumindest eines der Lastverteilungselemente (20, 30) eine Kontur aufweist, die zumindest abschnittsweise beschreibbar ist durch:

- eine Umfangslinie eines im Wesentlichen gleichseitigen Dreiecks,
- die Kontur eines dreizackigen Sterns,
- eine Umfangslinie eines Kreises, oder
- die Kontur eines Polyeders.

5. Lastverteilungsvorrichtung (100, 100a) nach einem der vorstehenden Ansprüche, wobei eine Form der Lastaufhahmepunkte (AP) und der Lastübertragungselemente (ap) so angepasst ist, dass bei einer Anordnung des zweiten Lastverteilungselements (30) über den drei ersten Lastverteilungselementen (20), bei der die Lastübertragungselemente (ap) des zweiten Lastverteilungselements (30) jeweils mit Lastaufnahmepunkten (AP) der drei ersten Lastverteilungselemente (20) im Eingriff stehen, und dabei ausgebildete Kontakte zwischen Lastaufhahmepunkten (AP) und Lastübertragungselementen (ap) in einer Ebene (L) liegen.

6. Lastverteilungsvorrichtung (100, 100a) nach einem der vorstehenden Ansprüche, weiter umfassend:

- eine Lastaufbringungsvorrichtung (40),

wobei die Lastaufbringungsvorrichtung (40) relativ zum zweiten Lastverteilungselement (30) so anordenbar ist, dass eine von der Lastaufbringungsvorrichtung (40) auf den Lastaufnahmepunkt (AP) des zweiten Lastverteilungselements (30) aufbringbare Kraft entlang einer gedachten Achse (CL) wirkt, die durch den Lastaufnahmepunkt (AP) des zweiten Lastverteilungselements (30) und im Wesentlichen rechtwinklig zu einer Ebene verläuft, in der die Lastübertragungselemente (ap) des zweiten Lastverteilungselements (30) liegen.

7. Lastverteilungsvorrichtung (100, 100a) nach Anspruch 6, wobei die Lastaufbringvorrichtung (40) umfasst: einen Massekörper, einen Prüfstempel einer Prüfmaschine, und/oder einen Hebelarm.

8. Lastverteilungsvorrichtung (100, 100a) nach Anspruch 7, wobei die Lastaufbringvorrichtung (40) ein Kontaktelement (CE) umfasst, das für die Lastaufbringung auf das zweite Lastverteilungselement (30) angepasst ist, indem eine Form des Kontaktelements (CE) an die Form des Lastaufnahmepunktes (AP) des zweiten Lastverteilungselements (30) angepasst ist, wobei das Kontaktelement (CE) einen konvexen Abschnitt aufweist, wenn der Lastaufnahmepunkt (AP) des zweiten Lastverteilungselements (30) einen konkaven Abschnitt aufweist, und das Kontaktelement (CE) einen konkaven Abschnitt aufweist, wenn der Lastaufnahmepunkt (AP) des zweiten Lastverteilungselements (30) einen konvexen Abschnitt aufweist.

9. Lastverteilungsvorrichtung (100, 100a) nach einem der vorstehenden Ansprüche, weiter umfassend:

- eine Grundplatte (10),

wobei die Vielzahl der Proben (2) jeweils eine Kontaktfläche und eine der Kontaktfläche gegenüber liegende Fügefläche aufweisen, wobei eine zentrale Längsachse (LA) der Proben (2) im Wesentlichen orthogonal zur Kontaktfläche verläuft, und
die Vielzahl der Proben (2) zwischen der Grundplatte (10) und den ersten Lastverteilungselementen (20) so anordenbar ist, dass die zentralen Längsachsen (LA) orthogonal zur Grundplatte (10) orientiert sind und jeweils durch ein Lastübertragungselement (ap) eines ersten Lastverteilungselements (20) verlaufen und die drei Lastübertragungselemente (ap) der drei ersten Lastverteilungselemente (20) jeweils, im Wesentlichen zentral, auf der oberen Kontaktfläche einer Probe (2) oder eines Probenersatzkörpers aufliegen,
wobei das zweite Lastverteilungselement (30) im Wesentlichen parallel zu den drei ersten Lastverteilungselementen (20) und zur Grundplatte (10) orientiert ist.

10. Lastverteilungsvorrichtung (100, 100a) nach Anspruch 9, weiter umfassend:

- ein Führungselement (11),

wobei das Führungselement (11) so auf der Grundplatte (10) angeordnet ist, dass eine seitliche Beweglichkeit zumindest eines der drei ersten Lastverteilungselemente (20) einschränkbar ist, wenn jeweils eine Probe (2) oder ein Probenersatzkörper zwischen der Grundplatte (10) und den drei Lastübertragungselementen (ap) der drei ersten Lastverteilungselemente (20) angeordnet ist/sind.

11. Lastverteilungsvorrichtung (100, 100a) nach einem der Ansprüche 9 oder 10, wobei ein Material der Grundplatte (10) und/oder ein Material der zumindest drei ersten Lastverteilungselemente (20) und/oder ein Material des zweiten Lastverteilungselements (30) ausgewählt ist unter einem Material, das eine thermische Ausdehnung von etwa 0,6 % bei einer Temperaturänderung von 275 K aufweist.

12. Lastverteilungsvorrichtung (100, 100a) nach einem der vorstehenden Ansprüche, weiter umfassend:

   - ein drittes Lastverteilungselement,

   wobei das dritte Lastverteilungselement einen Lastaufnahmepunkt (AP) und drei, dem Lastaufnahmepunkt (AP) gegenüber liegende Lastübertragungselemente (ap) umfasst, wobei der Lastaufnahmepunkt (AP) des dritten Lastverteilungselements in einem durch die drei Lastübertragungselemente (ap) definierten virtuellen Dreieck liegt, wobei die drei Lastübertragungselemente (ap) Eckpunkte des virtuellen Dreiecks sind; wobei das dritte Lastverteilungselement (30) so in Bezug zu zum zweiten Lastverteilungselement (20) anordenbar oder angeordnet ist, dass eines der drei Lastübertragungselemente (ap) des dritten Lastverteilungselements mit dem Lastaufnahmepunkt (AP) des zweiten Lastverteilungselementes (20) in Kontakt steht, wobei die Lastverteilungsvorrichtung (100, 100a) bis zu drei zweite Lastverteilungselemente (30) und bis zu 9 erste Lastverteilungselemente (20) umfasst.

13. Lastverteilungsvorrichtung (100, 100a) nach einem der Ansprüche 9 bis 12, wobei die Lastübertragungselemente (ap) der drei ersten Lastverteilungselemente (20) über eine Schraubverbindung mit dem betreffenden ersten Lastverteilungselement (20) verbunden sind, sodass durch eine Drehstellung des Lastverteilungselements (ap) ein Höhenunterschied der Proben (2) ausgleichbar ist.

14. Lastverteilungsvorrichtung (100, 100a) nach einem der vorstehenden Ansprüche, wobei alle Lastübertragungselemente (ap) eines Lastverteilungselements (20, 30) einen identischen Abstand zum Lastaufnahmepunkt (AP) des betreffenden Lastverteilungselements (20, 30) aufweisen, und $r \leq R$ gilt, vorausgesetzt "r" sei der Abstand der Lastübertragungselemente (ap) eines ersten Lastverteilungselements (20) von einer gedachten Achse (CL), die durch den Lastaufnahmepunkt (AP) des ersten Lastverteilungselements (20) und rechtwinklig zu einer Ebene verläuft, wobei diese Ebene im Wesentlichen von den drei Lastübertragungselementen (ap) des ersten Lastverteilungselements (20) definiert wird, und "R" sei der Abstand der Lastübertragungselemente (ap) des zweiten Lastverteilungselements (30) von einer gedachten Achse (CL), die durch den Lastaufnahmepunkt (LA) des zweiten Lastverteilungselements (30) und im Wesentlichen rechtwinklig zu derjenigen Ebene verläuft, die von den drei Lastübertragungselementen (ap) des zweiten Lastverteilungselements (30) definiert wird.

15. Verfahren zum synchronen Aufbringen einer definierten Andruckkraft auf eine Vielzahl von Proben (2), umfassend:

   - Bereitstellen einer Lastverteilungsvorrichtung (100, 100a) nach einem der Ansprüche 1-14;
   - Bereitstellen der Vielzahl von Proben (2), wobei die Proben (2) jeweils eine Kontaktfläche und eine der Kontaktfläche gegenüber liegende Fügefläche umfassen;
   - Anordnen der Lastverteilungsvorrichtung (100, 100a) auf der Vielzahl von Proben (2), sodass die Lastübertragungselemente (ap) der drei ersten Lastverteilungselemente (20) auf den Kontaktflächen der Proben (2) aufsitzen, und von den Lastübertragungselementen (ap) der drei ersten Lastverteilungselemente (20) auf die Proben übertragbare Kräfte entlang zentraler Achsen (CL) der Proben verlaufen, wobei die drei ersten Lastverteilungselemente (20) im Wesentlichen in einer Ebene liegen;
   - Konfigurieren einer Lastaufbringvorrichtung (40) derart, dass eine auf den zentral angeordneten Lastaufnahmepunkt (LA) des zweiten Lastverteilungselements (30) aufbringbare Kraft über die Lastübertragungselemente (ap) des zweiten Lastverteilungselements (20) der definierten Andruckkraft für die jeweilige Probe (2) entspricht;
   - Herstellen eines Kontaktes zwischen einem Kontaktelement (CE) der Lastaufbringvorrichtung (40) und einem zentralen Lastaufnahmepunkt (LA) eines dritten Lastverteilungselements oder eines zweiten Lastverteilungselements (30); und
   - Eintragen der Kraft über das Kontaktelement (CE).

16. Verfahren gemäß Anspruch 15, weiter umfassend:

- Anordnen zumindest einer Schicht eines Fügemittels zwischen der Fügefläche der Probe und einem Substrat (50).

17. Verfahren gemäß Anspruch 14 oder 15, weiter umfassend:

   - Temperieren der Vorrichtung (100, 100a), wobei das Temperieren in einem Temperaturbereich von -196 bis 300 °C erfolgt.

18. Kit (200) zur synchronen Belastung einer Vielzahl von Proben (2) mit einer definierten Andruckkraft, umfassend:

   - $3^n$ erste Lastverteilungselemente (20),
   wobei n= 1 oder 2 ist,
   - $3^m$ zweite Lastverteilungselemente (30),
   wobei m=n-1 ist;
   - ein drittes Lastverteilungselement, wenn n=2 ist;

   wobei jedes der ersten Lastverteilungselemente (20), jedes zweite Lastverteilungselement (30) und jedes dritte Lastverteilungselement einen Lastaufnahmepunkt (AP) und drei, dem jeweiligen Lastaufnahmepunkt (AP) gegenüber liegende Lastübertragungselemente (ap) umfasst.

19. Kit (200) nach Anspruch 18, wobei r ≤ R ist, vorausgesetzt "r" sei ein Abstand eines beliebigen Lastübertragungselements (ap) der ersten Lastverteilungsplatte (20) vom Lastaufnahmepunkt (AP) des ersten Lastverteilungselements (20) und "R" sei ein Abstand eines beliebigen Lastübertragungselements (ap) des zweiten Lastverteilungselements (30) von einem Lastaufnahmepunkt (AP) des zweiten Lastverteilungselements (30).

20. Kit (200) nach Anspruch 19, wobei die Abstände "r" für alle ersten Lastverteilungselemente (20) identisch sind; und/oder die Abstände "R" für alle zweiten Lastverteilungselemente identisch sind und/oder die Lastübertragungselemente (ap) der ersten Lastverteilungselemente (20) und/oder der zweiten Lastverteilungselemente (30) radialsymmetrisch um die korrespondierenden Lastaufnahmepunkte (AP) der Lastverteilungselemente (20, 30) angeordnet sind.

21. Kit (200) nach einem der Ansprüche 18 bis 20, wobei ein Lastübertragungselement (ap) einen Kopf oder eine Spitze einer Schraube umfasst, die in einem Gewinde drehbar anordenbar ist, wobei sich das Gewinde in einer zum Lastverteilungselement (20, 30) im Wesentlichen rechtwinklig verlaufenden Richtung erstreckt.

22. Kit (200) nach einem der Ansprüche 18 bis 21, wobei zumindest eines der Lastverteilungselemente (20, 30) eine Kontur aufweist, die zumindest abschnittsweise beschreibbar ist durch:

   - eine Umfangslinie eines im Wesentlichen gleichseitigen Dreiecks,
   - die Kontur eines dreizackigen Sterns,
   - eine Umfangslinie eines Kreises, oder
   - die Kontur eines Polyeders.

FIG. 1

FIG. 2

FIG. 3

FIG. 4

FIG. 5

100

FIG. 6

100a

FIG. 7

100a

FIG. 8

FIG. 9

FIG. 10

FIG. 11

FIG. 12

FIG. 13

FIG. 14

FIG. 15

FIG. 16

FIG. 17

FIG. 18

FIG. 19

**Europäisches Patentamt**
**European Patent Office**
**Office européen des brevets**

# EUROPÄISCHER RECHERCHENBERICHT

Nummer der Anmeldung

EP 19 15 8887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 423 994 A (SCOTT RONALD F ET AL) 28. Januar 1969 (1969-01-28) | 1-8,12, 14, 18-20,22 | INV. G01N3/08 |
| Y | * Spalte 5; Abbildungen 1,6 * | 9-11,13, 15-17,21 | ADD. G01N19/04 B30B15/06 |
| | ----- | | |
| X | CN 104 344 987 A (UNIV BEIHANG) 11. Februar 2015 (2015-02-11) * Abbildung 5 * | 1,18 | |
| | ----- | | |
| Y | EP 2 672 249 A2 (BUNDESREP DEUTSCHLAND [DE]) 11. Dezember 2013 (2013-12-11) * Absätze [0001], [0081], [0089] - [0091]; Abbildungen 4,8 * | 9-11,13, 15-17,21 | |
| | ----- | | |

**RECHERCHIERTE SACHGEBIETE (IPC)**

G01N
B30B

Der vorliegende Recherchenbericht wurde für alle Patentansprüche erstellt

| Recherchenort | Abschlußdatum der Recherche | Prüfer |
|---|---|---|
| Den Haag | 19. August 2019 | Böhler, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 19 15 8887

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-08-2019

| Im Recherchenbericht angeführtes Patentdokument | Datum der Veröffentlichung | Mitglied(er) der Patentfamilie | Datum der Veröffentlichung |
|---|---|---|---|
| US 3423994 A | 28-01-1969 | KEINE | |
| CN 104344987 A | 11-02-2015 | KEINE | |
| EP 2672249 A2 | 11-12-2013 | DE 102013105150 A1<br>EP 2672249 A2<br>US 2013327210 A1 | 12-12-2013<br>11-12-2013<br>12-12-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102013105140 A1